# EUROPEAN PATENT SPECIFICATION

(11) **EP 1 635 502 B1**
(45) Date of publication and mention of the grant of the patent: **22.05.2019**
(21) Application number: 04746411.0
(22) Date of filing: 18.06.2004
(51) Int. Cl.: H04L 9/08, G06F 13/00

(54) **SESSION CONTROL SERVER AND COMMUNICATION SYSTEM**
SITZUNGSSTEUERSERVER UND KOMMUNIKATIONSSYSTEM
SERVEUR DE COMMANDE DE SESSION ET SYSTÈME DE COMMUNICATION

(30) Priority: 19.06.2003 JP 2003175085; 20.06.2003 JP 2003176568; 20.06.2003 JP 2003176569
(43) Date of publication of application: 15.03.2006
(73) Proprietor: NIPPON TELEGRAPH AND TELEPHONE CORPORATION, Tokyo 100-8116 (JP)
(72) Inventor: ONO, Kumiko, Musashino-shi, Tokyo 180-8585 (JP); TACHIMOTO, Shinya, Musashino-shi, Tokyo180 -8585 (JP); SAKAYA, Seiichi, Musashino-shi, Tokyo 180-8585 (JP)
(74) Representative: Ahner, Philippe
(86) International application number: PCT/JP2004/008942
(87) International publication number: WO 2005/008954

(56) References cited:
- JP-A- 2000 059 352
- JP-A- 2000 250 832
- JP-A- 2003 108 527
- JP-A- 2003 502 757
- "Secure and Scalable Mobile IP Registration Scheme Using PKI", , 1 January 2003 (2003-01-01), XP55008154, Retrieved from the Internet: URL:http://www.springerlink.com/content/7y 0427kw3up5y034/fulltext.pdf [retrieved on 2011-09-26]
- "A PUBLIC-KEY BASED SECURE MOBILE IP", , 1 January 1997 (1997-01-01), XP55008152, Retrieved from the Internet: URL:http://www.csie.nctu.edu.tw/~jkzao/Pub lication/Paper, MoIPS Conf (MobiCom-9709 submit).pdf [retrieved on 2011-09-26]

## Description

### TECHNICAL FIELD

This invention relates to a session control server. In greater detail, the present invention relates to a session control server which performs issuance and management of digital certificates, to a communication device which performs communication for employing such digital certificates and to a communication system and a communication method thereof, and to a program for executing this communication method and a storage medium upon which this program is stored. Furthermore, this invention relates to a session control server which performs relay of signals, to a communication device and a communication system which performs communication which is encrypted based upon an encryption key, to a communication method thereof, and to a program thereof and to a storage medium upon which this program is stored. Yet further, this invention relates to a session control server which performs relay of signals, to a communication device which performs communication which is encrypted based upon an encryption key, to a communication system and a communication method thereof, and to a program thereof and to a storage medium upon which this program is stored.

### BACKGROUND ART

As an issuance server for digital certificates, a management server for digital certificates, or a certificate authority, used in the prior art, there may be cited an LDAP (Lightweight Directory Access Protocol) server or a Web (World Wide Web) server. The former is a protocol for accessing a X.500 base directory management database, and for operating such as generation, change, deletion, retrieval and so on of directory information upon a directory server are possible. The latter takes as its object to make it possible to generate hypertext upon the Internet, and to make it possible to access each and every item of information, and HTTP is used as a communication protocol between the client and the server.

With these methods of employing a server, when a person who is utilizing an digital certificate to perform encrypted communication, when needed, it is necessary to obtain an digital certificate of the recipient in the communication, according to requirements.

Furthermore, for digital certificates which have been obtained, it is also necessary to follow certificate authority links, to obtain a CRL (certificate revocation list) etc. to verify their validity.

With regard to the above-described matters, among the standards which have been developed by the IETF (Internet Engineering Task Force), which is the standardization institution for the Internet, there is RFC (Request for Comments) 2511 (Internet X.509 Certificate Request Message Format).

If the recipient in the communication holds one or more digital certificates, and those validity are different with each other, it is necessary for the person who employs the digital certificates, when starting a session, in order to decide which of the digital certificates is appropriate to utilize, to obtain multiple digital certificates which correspond to the recipient in the communication from a management server for digital certificates, and to verify the validities for each.

Furthermore, even if he has decided that a certificate is valid and is using it, and sends a signal, if by the communication device which is performing the reception this certificate is not set to a state in which it can be used, then it is not possible to perform decryption upon the receiving side, and there is the problem that there is a delay in the procedure of starting the session.

Furthermore, if an digital certificate has been received which includes a digital signature of the recipient, in order to decide whether the certificate which has been received is valid or not, a procedure of connection to an LDAP server etc., also be the problem of causing a delay in the procedure of starting the session.

Moreover, as methods for encrypting of communication information between users which are used from the prior art, there may be cited IPSec (Security architecture for Internet Protocol), TLS (Transport Layer Security), S/MIME, etc.

As encryption methods in which a relay server can refer to the information, are IPSec or TLS.

IPSec is a technique for strengthening the security of TCP/IP communication, and there are ESP (Encapsulation Trusted Payload) which specifies a method in which data is IP encapsulated and tunneling is performed, and AH (Authentication Header) in which data for user authentication is included in the IP data. And TLS is widely used in applications in which security between a client and a server is necessary, such as banking systems.

In the IPSec and TLS methods, negotiating the encryption key or method is performed between the starting point and the ending point of a transfer section, and encrypted communication is performed based upon the result thereof, so that the secrecy of the transmitted information which is sent and received by the communication devices is enhanced.

However, with encryption methods such as IPSec or TLS, it is necessary to negotiate the encryption method and the key between the starting point and the ending point of the transfer section, and to perform the encryption/decryption procedure at the starting point and the end point of the transfer section. Due to this, it becomes unavoidable for decrypting the information to be performed by a session control server which performs signal relaying, and it has been difficult to perform encrypted communication which can protect the information from the session control server.

As S/MIME is used for end to end security, the information is encrypted from end to end, so the information cannot be referred to by the relay server. Specifically, with the S/MIME encryption method, the encryption is performed between the originating and receiving communication devices, so that it is possible to protect the information from all the session control servers. However, even when it is necessary for some specific session control server to refer to the information, it is impossible for it to do so.

With regard to the above-described matters, among the written standards which have been developed by the IETF (Internet Engineering Task Force), which is the standardization institution for the Internet, there is RFC (Request for Comments) 3261 Section 26.2.

Jae-Pil Yoo et al in "Secure and Scalable Mobile IP Registration Scheme using PKI", ICCSA 2003, LNCS 2668, pp. 220-229 discloses using PKI in association with Mobile registration; in this document, separate entities are defined: a mobile node that sends a registration request, a Foreign or Home Agent that receive the registration request and a certification authority that issues certificates.

### DISCLOSURE OF INVENTION

The inventions is defined by appended independent communication device claim 1, session control server claim 2 and system claim 3.

### BRIEF DESCRIPTION OF THE DRAWINGS

FIG. 1 is a configuration diagram of a communication system according to the first embodiment of this invention.
FIG. 2 is a detailed block configuration diagram of the communication device of FIG. 1.
FIG. 3 is a detailed block configuration diagram of a session control server of FIG. 1.
FIG. 4 is a figure showing an example of signal sent by a communication device according to the first embodiment of this.
FIG. 5 is a figure showing an example of signal reception by a communication device according to the first embodiment of this invention.
FIG. 6 is a figure showing an example of signal reception by a session control server according to the third embodiment of this invention.
FIG. 7 is a figure showing an example of signal sent by a session control server according to the third embodiment of this invention.
FIG. 8 is a processing flow chart of a session control server and a communication device according to the second embodiment of this invention.
FIG. 9 is a processing flow chart of a session control server and a communication device according to the third embodiment of this invention.
FIG. 10 is a block configuration diagram of a communication system according to the second embodiment of this invention.
FIG. 11 is a detailed configuration diagram of a session control server of FIG. 10.
FIG. 12 is a detailed configuration diagram of a communication device of FIG. 10.
FIG. 13 is a figure showing an example of signal sent by a communication device (202-1) according to the second embodiment of this invention.
FIG. 14 is a figure showing an example of signal sent by a communication device (202-2) according to the second embodiment of this invention.
FIG. 15 is a figure for explanation of a communication method according to the fourth embodiment of this invention.
FIG. 16 is a figure for explanation of a communication method according to the fifth embodiment of this invention.
FIG. 17 is a figure for explanation of a communication method according to the sixth embodiment of this invention.
FIG. 18 is a configuration diagram of a communication system according to the third embodiment of this invention.
FIG. 19 is a block configuration diagram of a session control server of FIG. 18.
FIG. 20 is a block configuration diagram of a communication device of FIG. 18.
FIG. 21 is a figure showing an example of signal sent by a communication device (302-1) according to the third embodiment of this invention.
FIG. 22 is a figure showing an example of signal sent by a communication device (302-2) according to the third embodiment of this invention.
FIG. 23 is a figure for explanation of a communication method according to the seventh embodiment of this invention.
FIG. 24 is a figure for explanation of a communication method according to the eighth embodiment of this invention.
FIG. 25 is a figure for explanation of a communication method according to the ninth embodiment of this invention.

### BEST MODE FOR CARRYING OUT THE INVENTION

In the following, preferred embodiments of the preferred invention will be explained with reference to the drawings. However, this invention is not limited to the various embodiments below; for example, appropriate combination of various structural elements of these embodiments with one another would be acceptable.

In the following, embodiments of this invention will be described in detail with reference to the drawings.

### - FIRST EMBODIMENT -

### - SYSTEM CONFIGURATION -

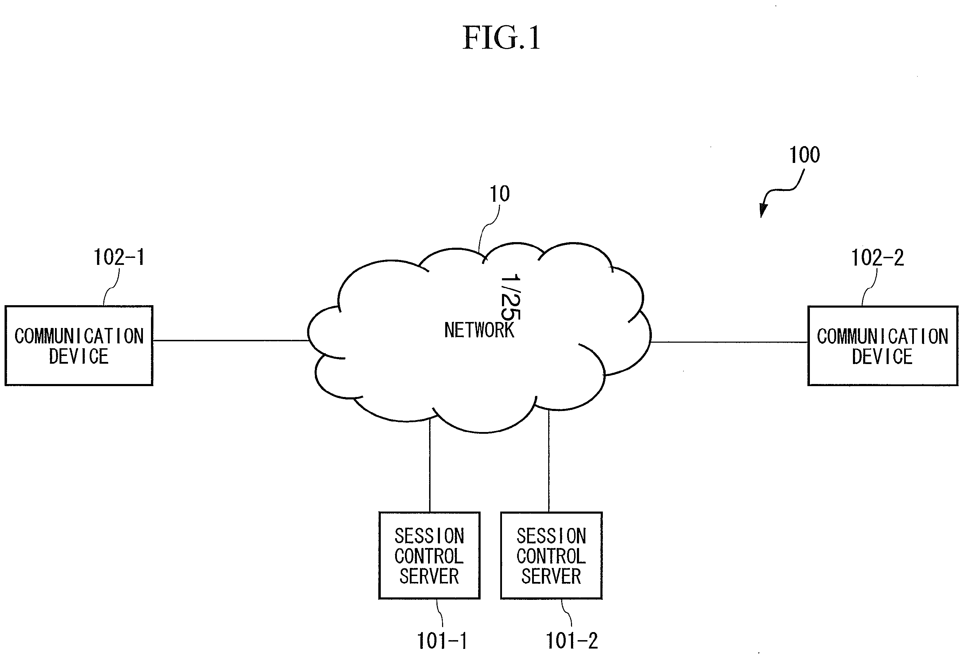

FIG. 1 is a configuration diagram of a communication system according to the first embodiment of this invention.

As shown in FIG. 1, this communication system 100 is configured so as to comprise one or more session control servers 101 which are connected so as to be able to communicate via a network 10, and a plurality of communication devices 102.

Furthermore, according to the procedures of this invention, the communication devices 102 perform communication via the session control server 101 by encrypted communication. It should be understood that although, for the communication system 100, two session control servers 101 are shown as being provided, this number of units is not limited to being two. Furthermore, although two of the communication devices are shown as being provided, this number of units is not limited to being two.

It should be understood that, with this invention, the communication device 102 includes communication devices such as personal computers, portable terminals, or gateways or the like, and the structure of the network may be cabled or wireless.

In the following, in order to serve the convenience of explanation, the explanation will refer to the communication device 102-1 as being the signal originating side, and to the communication device 102-2 as being the signal receiving side. And the explanation will be made in terms of the session control server 101-1 including the communication device 102-1, and the session control server 101-2 including the communication device 102-2.

The session control servers 101-1 and 101-2 receive issuance requests or registration requests for location registration requests and public key certificates from the respective communication devices 102-1 and 102-2, and store location registration information and public key certificates.

### - COMMUNICATION DEVICE -

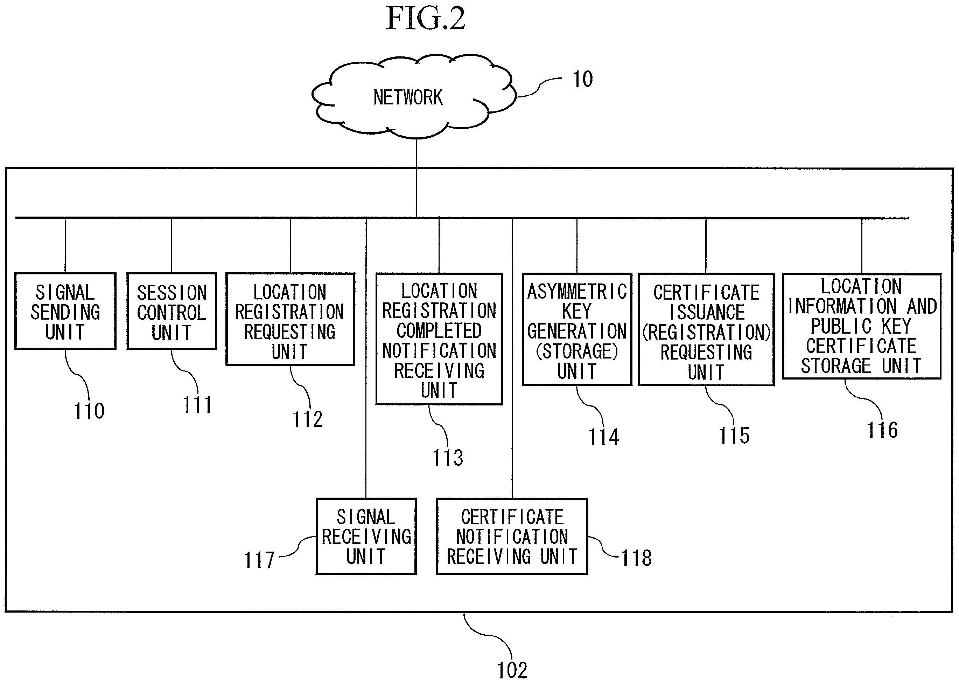

FIG. 2 is a block configuration diagram of a communication device according to the first embodiment of this invention.

As shown in FIG. 2, this communication device 102 comprises a signal sending unit 110, a session control unit 111, a location registration requesting unit 112, a location registration notification receiving unit 113, an asymmetric key generation (storage) unit 114, a certificate issuance (registration) requesting unit 115, a location information and public key certificate storage unit 116, a signal receiving unit 117, and a certification notification receiving unit 118.

Here 114, along with being an asymmetric key storage unit, is also an asymmetric key generation unit, and furthermore 115, along with being a certificate registration requesting unit, is also a certificate issuance requesting unit. Accordingly, in the following, one of these may be shown in brackets. It should be understood that 114 and 115 may also be elements which include only one of these functions.

For a public key which has been generated (stored) by the asymmetric key storage (generation) unit 114, the communication device 102-1 generates it according to a request signal by the certificate registration (issuance) requesting unit 115, matches it with a location registration request signal which has been generated by the location registration requesting unit 112, and sends it to the session control unit 111.

The signal which has been generated by the session control unit 111 is sent to the session control server 101 by the signal sending unit 110.

After this, the communication device 102-1 receives a location registration completed notification signal from the session control server 101-1, analyzes the contents of the signal with the session control unit 111, and sends it to the location registration notification receiving unit 113.

If a public key certificate is attached, this is received by the certificate notification receiving unit 118, and is stored together with the location information and the public key certificate in the location information and public key certificate storage unit 116.

By doing this, it becomes possible for the communication device 102-1 to attain the state of having acquired public key certificates which can be used, to receive signals which include encryption information using public keys, and to send signals to which are attached digital signatures which use public key certificates. By appending a digital signature when sending a signal in this manner, it becomes possible to perform mutual authentication between source and destination users, user authentication by the server, and denial prevention of signal sent by users.

### - FIRST EMBODIMENT -

In the first embodiment, the communication device 102-1 requests location registration and certificate issuance to the session control server 101-1, and there is exchange until it receives notification from the session control server 101-1 that the location registration and the certificate issuance are complete. It should be understood that, although the location registration request is included in the location registration and the certificate issuance request, the certificate issuance request may be included, or may not be included.

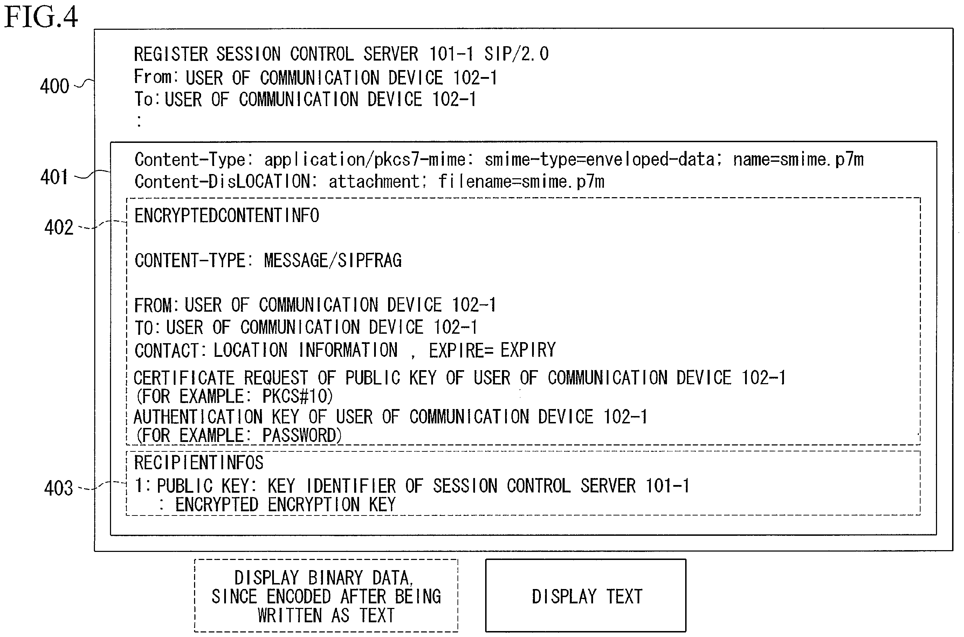

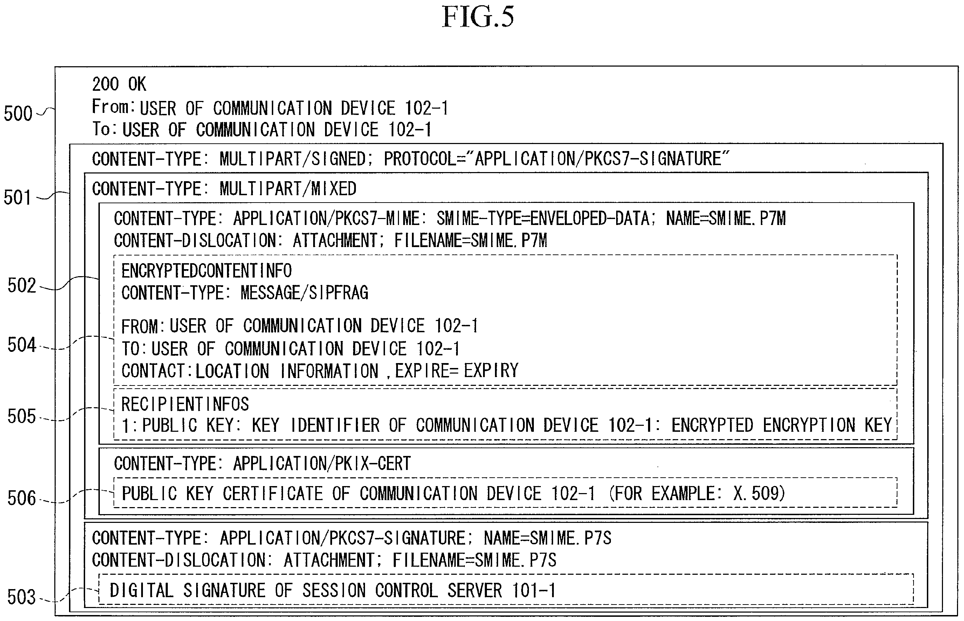

FIG. 4 is a figure showing an example of signal sent by the communication device of FIG. 2, and FIG. 5 is a figure showing an example of signal reception by the communication device of FIG. 2.

The counterpart of the communication device 102-1 here is the session control server 101-1. For example, the signal which is sent from the communication device 102-1 shown in FIG. 4 is a REGISTER method (400), which is one type of SIP message which conforms to RFC3261, and location information for the communication device is set in this message, along with a desired expiry (402). Furthermore, a public key certificate request and a user authentication key are also set (402). In order to maintain secrecy, these items of information are encrypted with a contents encryption key, and are sent as S/MIME Enveloped-Data (401).

As the key encryption key for encrypting the contents encryption key, the public key of the session control server 101-1 may be used, or a pre-shared key (a password or the like) between the users of the session control server 101-1 and the communication device 102-1 may be used.

As shown in FIG. 5, the signal which is received by the session control server 101-1 is the response 200 OK (500) corresponding to the REGISTER method, and, in this message, there are set the location information which is registered, and the expiry which has been checked by the session control server 101-1 (504). In order to maintain secrecy, these items of information are encrypted with an encryption key, and are set within the EnvelopedData (502). Furthermore, a public key certificate is also set (504).

In the decryption of the signal, first the decryption of the contents encryption key (505) which has been encrypted is performed.

In the decryption of the encryption key, the secret key of the communication device 102-1 may be used, or a pre-shared key (a password or the like) between the users of the session control server 101-1 and the communication device 102-1 may be used.

The information which has been encrypted is decrypted (504) with the contents encryption key which has been decrypted.

The location information and the public key certificate which have been received are stored, along with the expiry, in the location information and public key certificate storage unit 116.

In order to detect whether it is tampered or not, if the digital signature (503) of the server is attached, this signature may be checked.

### - SESSION CONTROL SERVER -

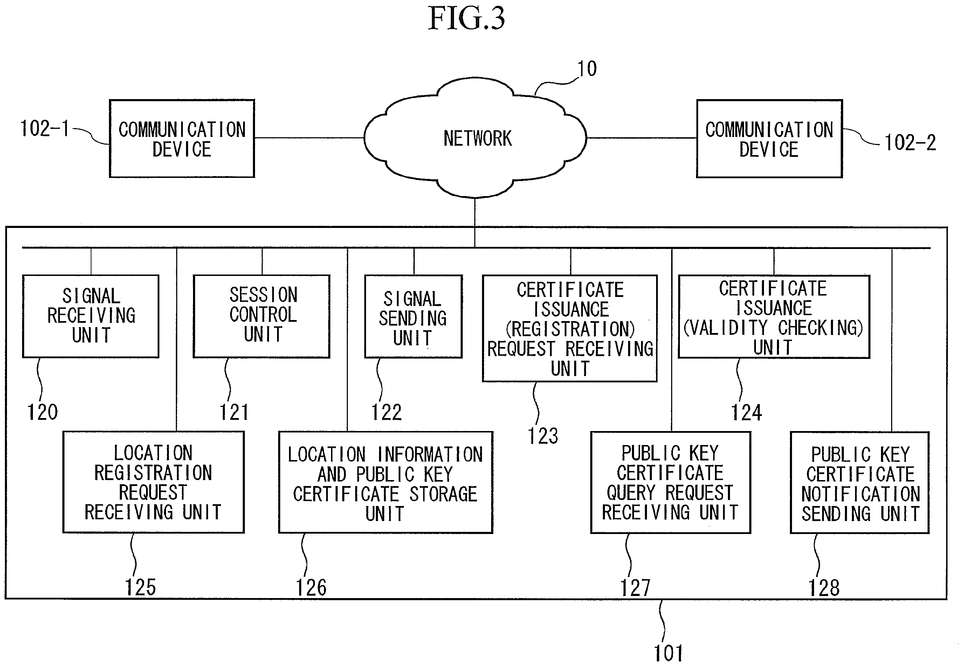

FIG. 3 is a block diagram of the session control server according to the first embodiment of this invention.

As shown in FIG. 3, the session control server 101 comprises a signal receiving unit 120, a session control unit 121, a signal sending unit 122, a certificate issuance (registration) request receiving unit 123, a certificate issuance (validity checking) unit 124, a location registration request receiving unit 125, a location information and public key certificate storage unit 126, a public key certificate query request receiving unit 127, and a public key certificate notification sending unit 128.

Here, 123 is endowed with the functions both of a certificate issuance request receiving unit and also of a certificate registration request receiving unit, and 124 is endowed with the functions both of a certificate issuance unit and also of a certificate validity checking unit. It should be understood that 123 and 124 may also be endowed with only one of the above-described two functions.

The signal receiving unit 120 receives a location registration request signal from the communication device 102-1. When the session control unit 121 decides that the location registration request signal which it has received is a location registration request signal, it sends this location registration request signal to the location registration request receiving unit 125.

After the location registration request receiving unit 125 has completed user authentication normally, if it determines that a certificate issuance request is attached, it provides the required information to the certificate issuance request receiving unit 123. The certificate issuance request receiving unit 123 checks that the contents of the request are proper, and the certificate issuance unit 124 issues a certificate to the user.

The certificate which has been issued and the location information are stored in the location information and public certificate storage unit 126.

The session control unit 121 creates a response signal which includes the location information and information about the public key certificate, and sends it to the communication device 102-1.

### - SECOND EMBODIMENT -

In the second embodiment, the session control server 101-1 receives a request for location registration and certificate issuance from the communication device 102-1, and an exchange takes place, until it sends a notification of completion of location registration and certificate issuance to the communication device 102-1.

FIGS. 4 and 5, as described above, are respectively an example of a signal which is sent from the communication device 102-1 to the session control server 101-1, and an example of a signal which is sent from the session control server 101-1 to the communication device 102-1. Due to this, in this example, the exemplary signal which is sent from the session control server 101-1 to the communication device 102-1 is FIG. 5, while the exemplary signal which is received from the communication device 102-1 is FIG. 4.

As shown in FIG. 4, for example, the signal which is received by the session control server 101-1 from the communication device 102-1 is a REGISTER method, which is one type of SIP message which conforms to RFC3261, and location information for the communication device is set in this message, along with an expiry (402). Furthermore, a public key certificate request and a user authentication key are also set (402). In order to maintain secrecy, these items of information are encrypted with an encryption key.

In order to obtain the contents encryption key, first, the session control server 101-1 decrypts the contents encryption key which has been encrypted.

In the decryption, the secret key of the session control server 101-1 may be used, or a pre-shared key (a password or the like) between the users of the session control server 101-1 and the communication device 102-1 may be used.

The session control server 101-1 decrypts the information which has been encrypted by using the contents encryption key which has been obtained by decryption.

The location information registration request which has been obtained by decryption, the user authentication key, and the certificate issuance request are obtained.

The session control server 101-1, after user authentication, checks that the certificate issuance request is proper, and then the session control server 101-1 issues a public key certificate, which constitutes a basis of issuance.

The term of validity of the public key certificate which has been issued (504) is set to be the same as the term of validity of the location information.

The location information and the public key certificate are stored together with the term of validity.

As shown in FIG. 5, the session control server 101-1 sets (504) the location information which has been registered, together with the expiry which has been checked by the session control server 101-1, in the normal response 200 OK (500) to the REGISTER method. In order to maintain secrecy, these items of information are encrypted with the encryption key (502). Furthermore, the public key certificate is also set (506). First, an encryption key is generated for the session control server 101-1 to encrypt the signal. Next, this encryption key is encrypted. At this time, the public key of the communication device 102-1 may be used, or a pre-shared key (a password or the like) between the users of the session control server 101-1 and the communication device 102-1 may be used.

The session control server 101-1 sends the signal which has been generated in this manner to the communication device 102-1.

In order to detect whether or not tampering has taken place, the digital signature (503) of the session control server 101-1 may be attached and sent.

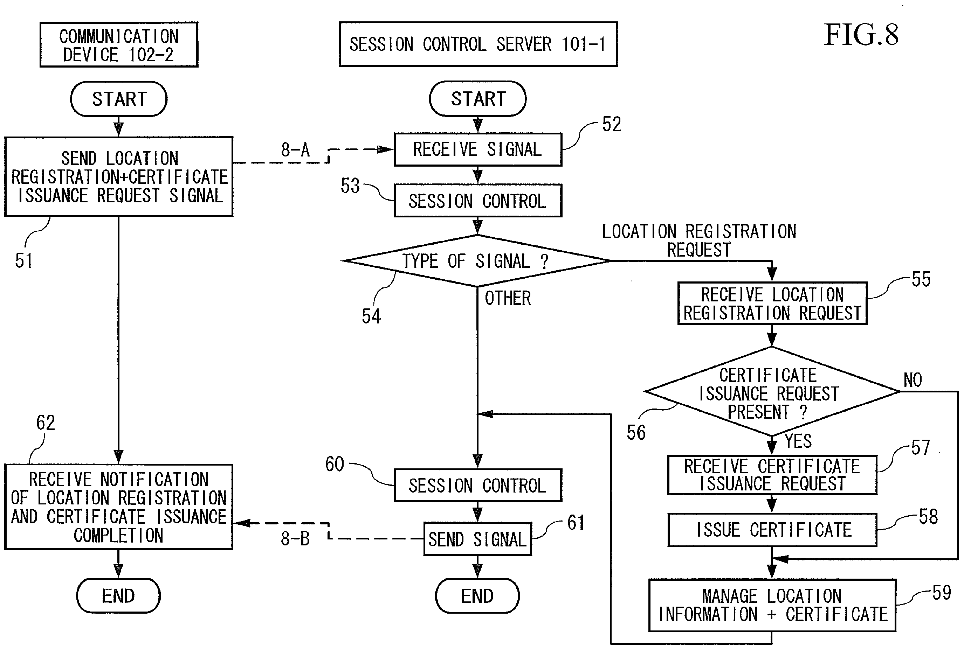

FIG. 8 is a flow chart of the location registration and certificate issuance procedure of this communication device according to the second embodiment.

Although encryption or decryption or the like is performed upon the signal which is sent from the communication device, here, the description of this procedure is omitted.

First, in order to perform a location registration request of the communication device 102-1, the communication device 102-1 generates an asymmetric key pair, and sends a location registration and certificate issuance request signal, which consists of the combination of a location registration request and a certificate issuance request for the public key in this key pair, to the session control server 101-1 (51) (8-A). It should be understood that, although the location registration request is included in this location registration and certificate issuance request signal, the certificate issuance request may be included, or may not be included. The session control server 101-1 receives this signal (52), performs session control (53), discriminates the type of the signal (54), if it is a location registration request, receives this location registration request (55), decides whether or not a certificate issuance request is present (56), and, if no such certificate issuance request is present, manages the location information and the certificate (59). Furthermore, if a certificate issuance request is present, it receives the certificate issuance request (57), issues a certificate (58), and then manages the location information and the certificate (59). And it performs session control (60), and sends a signal to the communication device 102-1 (61) (8-B). The communication device 102-1 receives the notification of location registration and certificate issuance completion (62). It should be understood that, although a location registration completion notification is included in this notification of location registration and certificate issuance completion, a certificate issuance completed notification may be included, or may not be included.

### - THIRD EMBODIMENT -

As the third embodiment, an exchange will be described for a case in which a signal which has been received by the another session control server 101-2 from the communication device 102-2 is an OPTIONS method, which is one type of SIP message which conforms to SIP, and in which a public key certificate query request for the communication device 102-1 is set in this message.

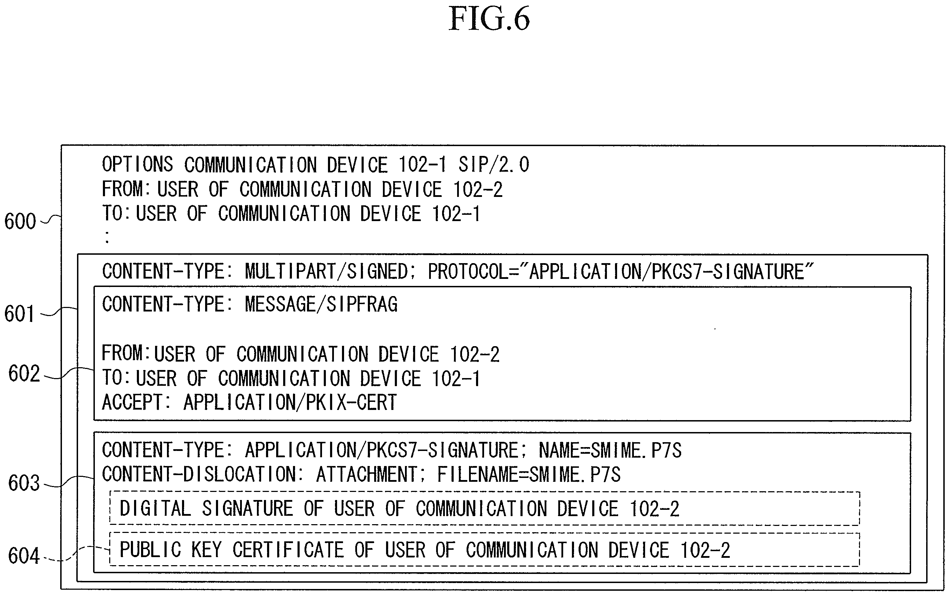

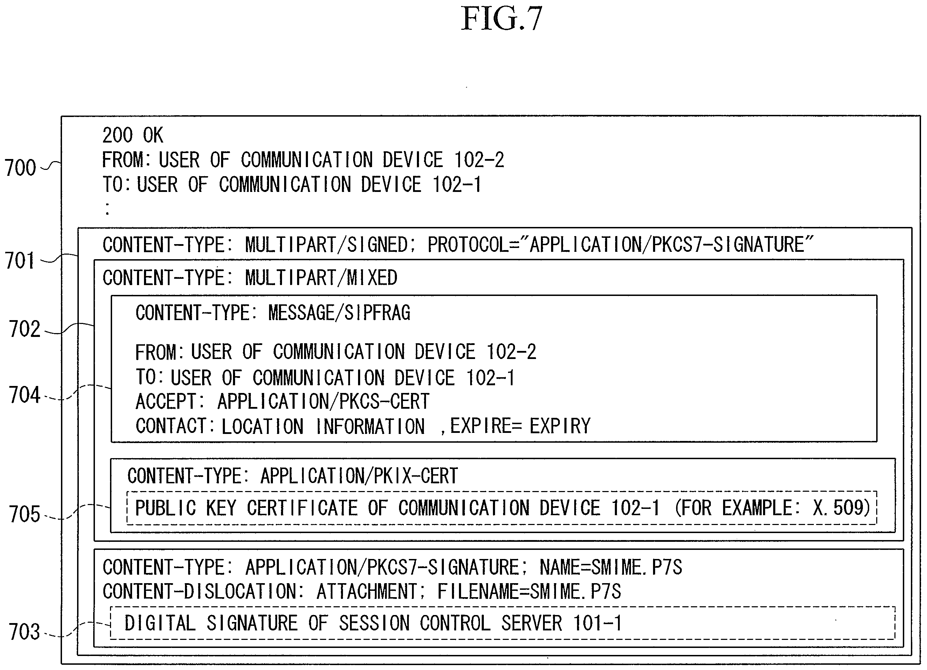

FIG. 6 is a figure showing an example of signal reception by the session control server of FIG. 3, and FIG. 7 is a figure showing an example of signal sent by the same session control server.

In 600, in order to make it possible to detect the presence or absence of tampering of the contents queried, a digital signature of the user of the communication device 102-2 and a public key certificate of the user of the communication device 102-2 for signature for signature verification are set (604). The session control server 101-2 refers to the domain name which is set in the Request-URI of the OPTIONS method, and decides whether or not it is a method addressed to its own domain. If it is not a method addressed to its own domain, then it is sent to the session control server 101-1 which is shown as the domain name.

The session control server 101-1 receives the OPTIONS method, refers to the domain name which is set in the Request-URI of this OPTIONS method, and makes a decision as to whether or not it is a method which is addressed to its own domain. If it is a method which is addressed to its own domain, it decides as to whether or not it is a certificate registration request. If it is a certificate registration request, then it searches in the location information and public key certificate storage unit 126 for the location information, the public key certificate, and the expiry of the user of the communication device 102-1, and obtains the information which is valid at this time point. These items of information which have been obtained, as shown in FIG. 7, are set to response 200 OK for the OPTIONS method, and are sent to the communication device 102-2.

It is possible for the session control server 101-1 to send this message directly to the communication device 102-2, but here, it sends it via the session control server 101-2.

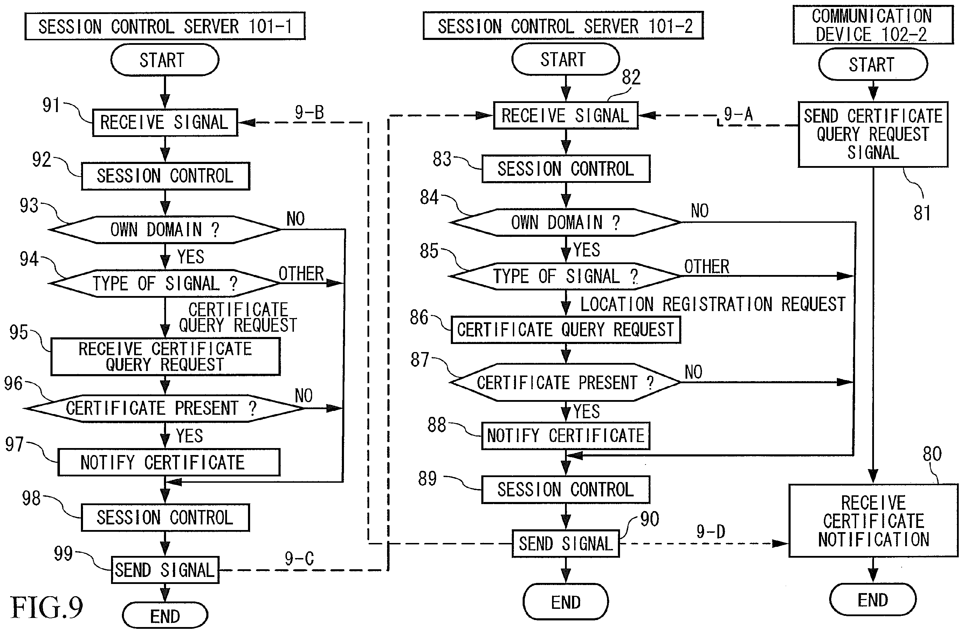

FIG. 9 is a flow chart of the certificate inquiry procedure according to the third embodiment of this invention. Although encryption or decryption or the like is performed upon the signal which is sent from the communication device, here, the description of this procedure is omitted.

The communication device 102-2 sends a certificate query request signal to the session control server 101-2 (81) (9-A). When it receives this signal (82), the session control server 101-2 performs session control (83), decides whether or not it is addressed to its own domain (84), and, if it is addressed to its own domain, performs session control (89) and sends it to the corresponding session control server (90). In this case, it transfers it to the session control server 101-1 which is the destination (9-B). If it is addressed to its own domain, it determines the type of signal (85), and, if it is a certificate query request, it receives the certificate query request (86), determines whether or not there is a certificate (87), and if there is a certificate, performs notification of the certificate (88), performs session control (89), and sends a signal to the communication device 102-2 (90) (9-D).

The session control server 101-1 receives this signal (91), performs session control (92), decides whether or not it is addressed to its own domain (93), and, if it is not addressed to its own domain, performs session control (98) and sends it to another session control server (99), or, if the destination to which it is to be sent is unclear, returns an error response to the session control server 102-1. If it is addressed to its own domain, it determines the type of signal (94), and if it is a certificate query request, receives the certificate query request (95). It determines whether or not there is a certificate (96), and, if there is a certificate, it performs certificate notification (97), performs session control (98), and sends a signal to the session control server 101-2 (99) (9-C).

When it receives this signal (82), the session control server 101-2 performs session control (83), and, if it is not addressed to its own domain, sends a signal (90) to the communication device 102 which is the destination (9-D). The communication device 102-2 receives this certificate notification (80).

When it receives the error response, the session control server 101-2 sends said error response to the communication device 102-2.

With the communication method according to this embodiment, by managing the public key certificates which are in a state of being capable of being employed by the communication devices with the session management server in this manner, it becomes possible to distribute and circulate digital certificates (public key certificates) which are capable of being employed in session communication).

Furthermore since, when the digital certificates are being distributed by the session control server, the validity of the certificates is checked by the session control server, accordingly it becomes possible to check the validity of the digital certificates which are used in the session control signals without inquiry to the authenticating station or the like.

It should be understood that if, after having programmed the operational flow of FIGS. 8 and 9, this program is stored upon a recording medium such as a CD-ROM or the like, this can be convenient in the case of sale or lease of the program. Furthermore, it is possible to implement this invention in an easy manner by loading this recording medium into a computer which constitutes the session control server, or into a computer of the communication device, and by installing the program and executing the program.

Since, as has been explained above, according to the first embodiment of this invention, an digital certificate (a public key certificate) which is necessary for high secrecy signal transmission and reception between communication devices is managed after having been checked by the session control server for validity in correspondence to the communication device, accordingly distribution of digital certificates which can actually be utilized is possible, and validity checking during session establishment becomes easy for the user.

### - SECOND EMBODIMENT -

### - SYSTEM CONFIGURATION -

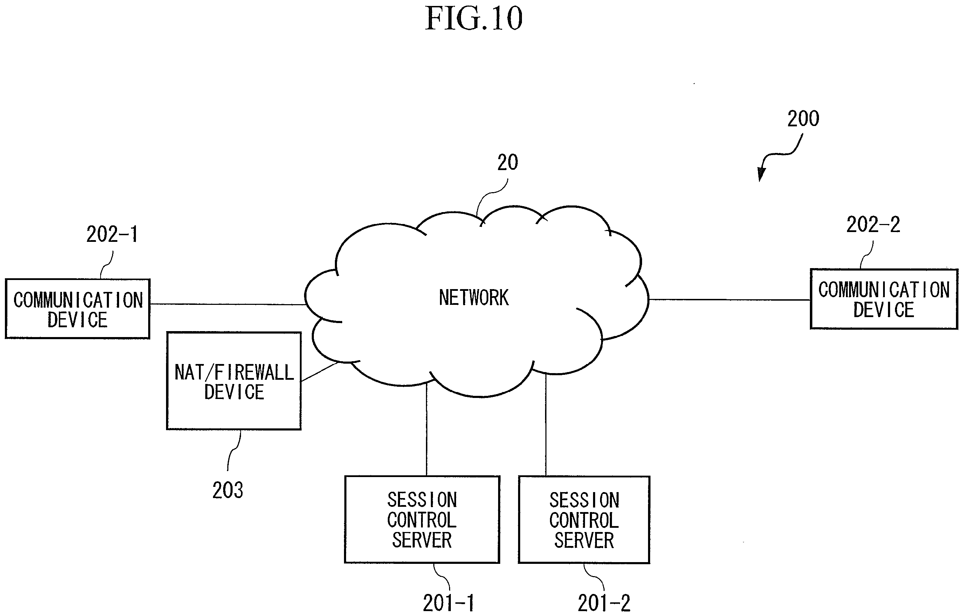

FIG. 10 is a configuration diagram of the communication system according to the second embodiment of this invention.

As shown in FIG. 10, this communication system 200 comprises a plurality of session control servers 201, a plurality of communication devices 202 and NAT/firewall devices 203, and a network 20.

It should be understood that the communication devices 202 perform communication via the session control servers 201 with signals which include encryption information, according to the procedure of this invention. Moreover, it should be understood that, in this communication system 200, the session control servers 201 are not limited to being two in number. And although, here, two of the communication devices 202 are shown, they are not limited to being two in number. And, although here one NAT/firewall device 203 is shown, it is not limited to being one in number either.

It should be understood that, according to this invention, the communication devices 202 include communication devices such as personal computers, portable terminals, or gateways or the like, and the structure of the network 20 may be cabled or wireless. In the following, in order to serve the convenience of explanation, the explanation will be made in terms of the communication device 202-1 as being the signal originating side, and the communication device 202-2 as being the signal reception side. And the explanation will refer to the session control server 201-1 as being the signal originating side, and to the session control server 201-2 as being the signal reception side.

The communication device 202-1 sends to the session control server 201-1, along with encrypted information, a first encryption key which has been encrypted using the communication device 202-1, and a first encryption key which has been encrypted using the session control server 201.

The session control server 201-1 receives the encrypted information and the two encrypted first encryption keys which have thus been sent from the communication device 202-1, decrypts the information therein which is to be used by the session control server, and decrypts the encrypted information with the first encryption key which has been obtained. In this manner, it becomes possible to refer to the information.

At this time, based upon the information which has been referred to, the session control server 201-1 may send a request to the NAT/firewall device 203 to alter its filtering conditions. After having received a filtering conditions alteration completed notification from the NAT/firewall device 203, the session control server 201-1 sends a signal which includes the encrypted information which has been received from the communication device 202-1 and the two first encryption keys to the session control server 201-2.

The session control server 201-2 receives the encrypted information and the two first encryption keys which have been encrypted from the session control server 201-1, but it is not able to refer to the encrypted information, since these cannot be decrypted. The session control server 201-2 sends this encrypted information and the two first encryption keys which have been encrypted to the communication device 202-2.

The communication device 202-2 decrypts the information for the communication device 202-2 which has been received from the session control server 201-2, and decrypts the information which has been encrypted using the first encryption key which has been obtained. In this manner, it becomes possible to refer to the information.

The communication device 202-2 encrypts the response signal and so on which are to be sent to the communication device 202-1 by reusing the first encryption key which is stored in correspondence to the session, and sends it to the communication device 202-1 via the session control servers 201-1 and 201-2, or directly.

### - COMMUNICATION DEVICE -

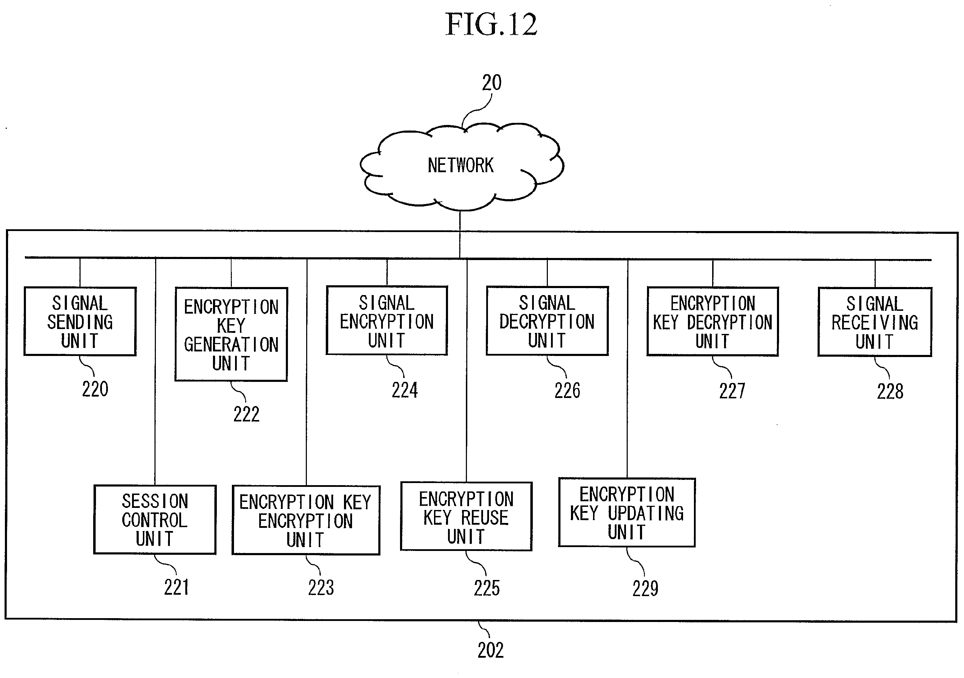

FIG. 12 is a block configuration diagram of a communication device according to the second embodiment of this invention.

As shown in FIG. 12, this communication device 202 is configured so as to comprise a signal sending unit 220, a session control unit 221, an encryption key generation unit 222, an encryption key encryption unit 223, a signal information encryption unit 224, an encryption key reuse unit 225, a signal information decryption unit 226, an encryption key decryption unit 227, a signal receiving unit 228, and an encryption key updating unit 229.

Among the signals which have been generated by the session control unit 221, the communication device 202-1 encrypts the information for which secrecy is required with the signal encryption unit 224, using the first encryption key which has been generated by the encryption key generation unit 222.

And encryption is performed upon this first encryption key by the encryption key encryption unit 223, using the second encryption key of communication device and server which are subjected to the disclosure (for example, in the embodiment, this is supposed to be the public key). At this time, the first encryption key which is used is stored in correspondence with the session identified in the encryption key reuse unit 225.

Among the information which has been generated by the session control unit 221, the information for which decryption is requested by the session control server 201 and the communication device which is the transmission destination is added to the information which is not encrypted, and this is sent by the signal sending unit 220 to the session control server 201-1, along with the information which has been encrypted with the first encryption key, and the first encryption key which has been encrypted with the second encryption key of the destination of the decryption request is retained. By doing this, it becomes possible to send the signal in a state in which, as far as the information for which secrecy is required is concerned, it can only be disclosed to the specified session control server 201-1 and communication device 202-2.

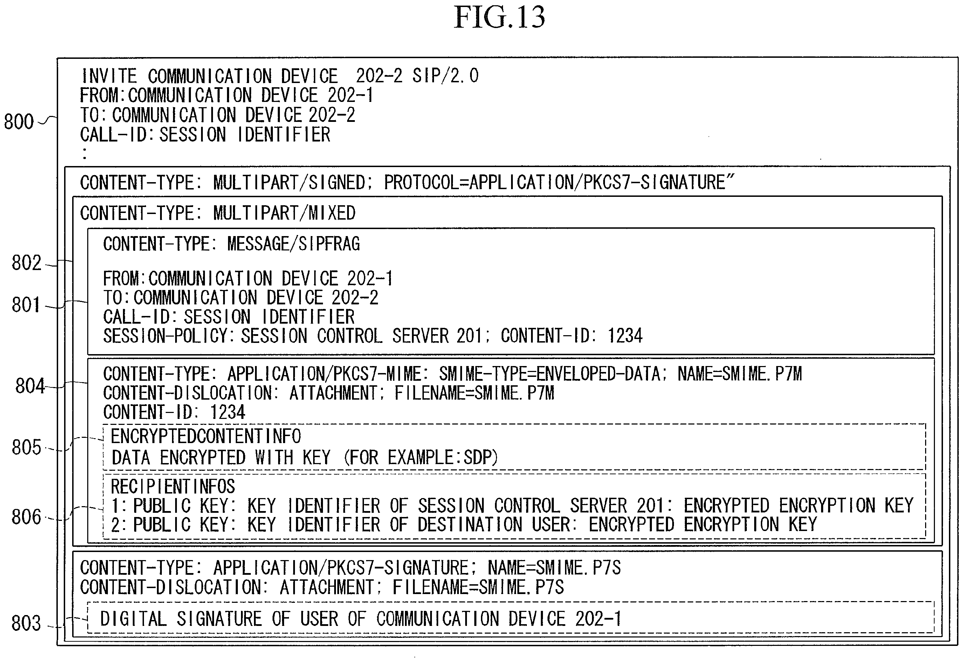

FIG. 13 is a figure showing an example of signal sent by the communication device 202-1 according to the second embodiment of this invention.

The communication device 202-1 encrypts the information for which secrecy is required by using the first encryption key. This first encryption key is subjected to encryption by using both of the second encryption keys of the communication device and server which are subjected to the disclosure. The information for which decryption is requested by the session control server 201 is added to the information which is not encrypted. It is sent to the session control server 201-1 by the signal sending unit 220, along with the information which has been encrypted with the first encryption key and the first encryption key which has been encrypted with the second encryption key of the destination of the decryption request is retained.

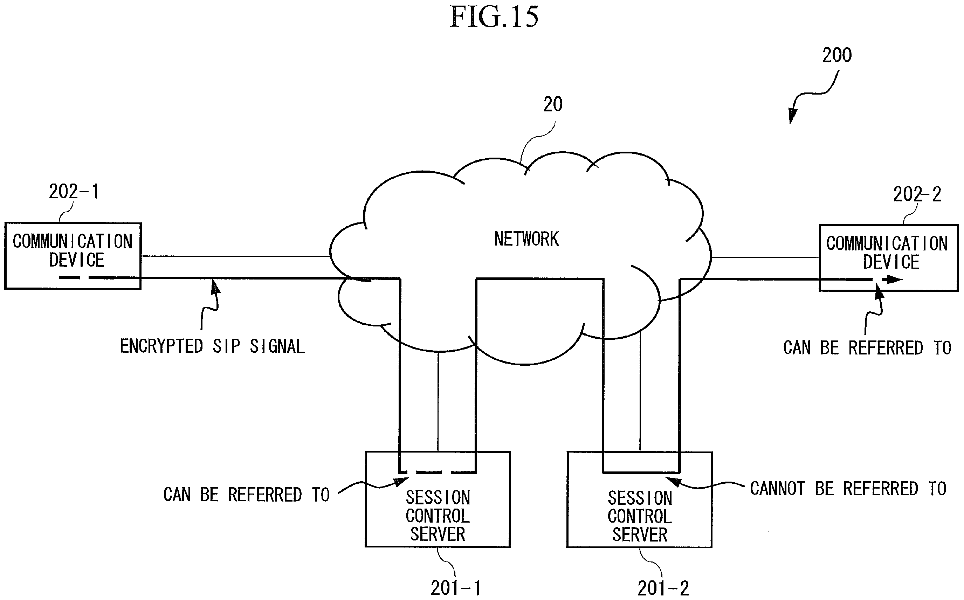

This example of signal transmission will be further explained in the explanation of the fourth embodiment, with reference to FIG. 15.

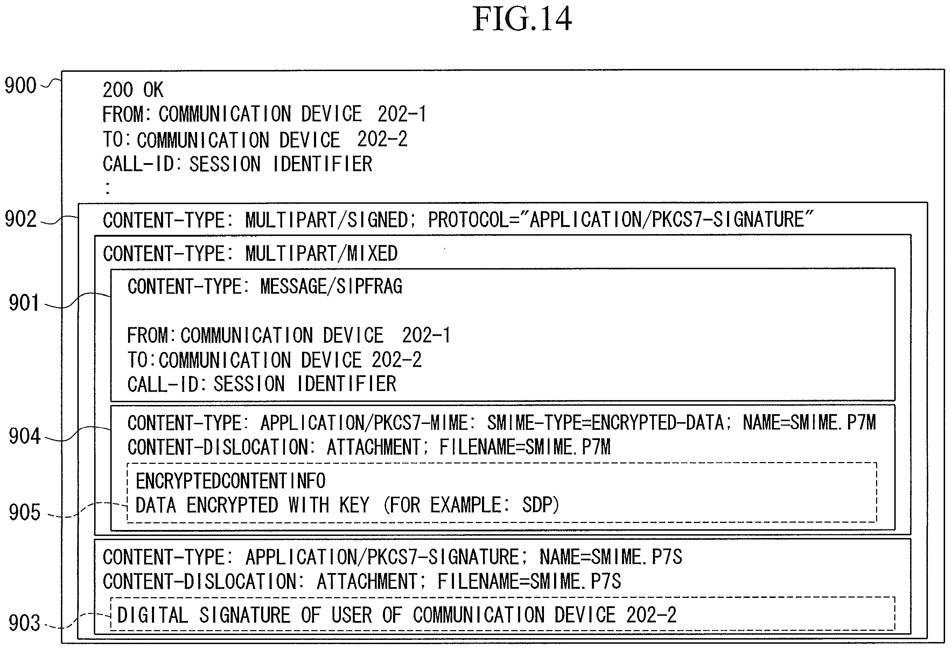

FIG. 14 is a figure showing an example of signal transmission of the communication device 202-2 according to the second embodiment of this invention.

This example of signal transmission will be further explained in the explanation of the fourth embodiment, with reference to FIG. 15.

### - SESSION CONTROL SERVER -

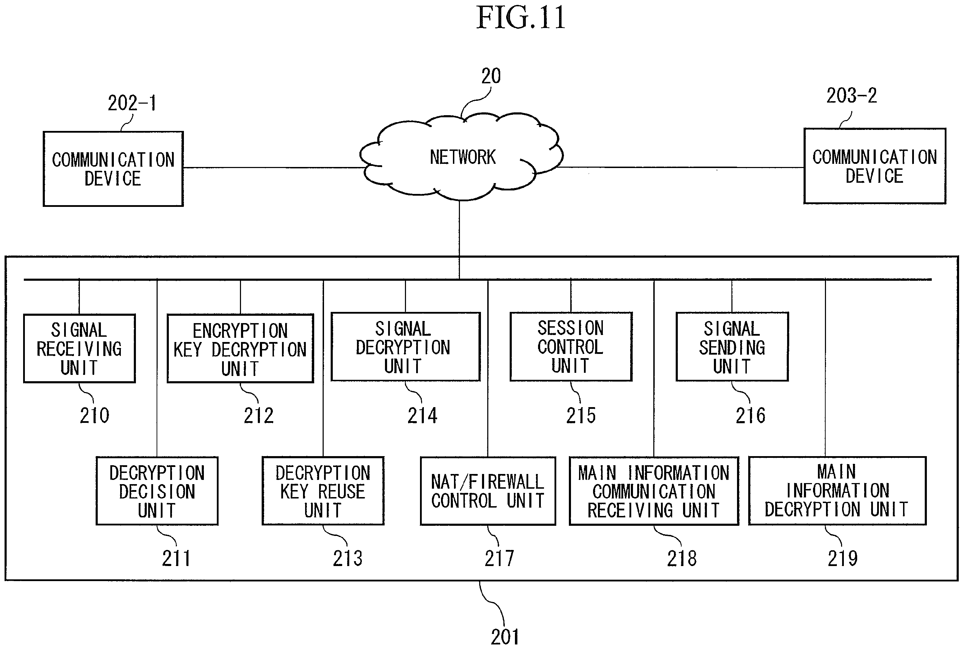

FIG. 11 is a block configuration diagram of a session control server according to the second embodiment of this invention.

As shown in FIG. 11, the session control server 201 comprises a signal receiving unit 110, a decryption decision unit 211, an encryption key decryption unit 212, a decryption key reuse unit 213, a signal information decryption unit 214, a session control unit 215, and a signal sending unit 216. It is also equipped with a NAT/firewall control unit 217, a main information communication receiving unit 218, and a main information decryption unit 219.

By referring to the data of the first encryption key which has been stored, and having decided whether to perform decryption, the encryption key decryption unit 212 decrypts the first encryption key using the second decryption key which corresponds to an arbitrary second encryption key, and transfers the encryption key to the information decryption unit 214. By decrypting the signal information, it becomes possible to refer to the control information between the communication devices, and the information which is required by the session control unit 215 becomes available.

The decryption key corresponds to the identifier within the session control unit 215, and it is stored by the decryption key reuse unit 213 in correspondence with the identifier of the session which is included in the signal information.

When the preparations for signal sent by the session control unit 215 have been completed, a signal which includes the encrypted information which has been received by the signal receiving unit 110 and the first encryption key which has been encrypted is sent to the communication device 202-2 by the signal sending unit 216.

### - FOURTH EMBODIMENT -

FIG. 15 is a figure for explanation of the communication method according to the fourth embodiment of this invention.

For this fourth embodiment, an example will be explained in which session control signals which have been generated by a communication device 202-1 are sent from that communication device 202-1 to a communication device 202-2 via a session control server 201-1 which is trusted, and via a session control server 201-2 which is not trusted.

For example, as shown in FIG. 13, a signal which is sent from the communication device 202-1 is an INVITE method 800, which is one type of SIP message which conforms to RFC3261, and control information between the communication devices (SDP: Session Description Protocol) 805 which is encrypted is included in this message. In SDP, as main communication information for the communication device 202-1, there is included the IP address for reception, a port number, and so on. In order to detect tampering, it is also acceptable for a digital signature of the user of the communication device 202-1 to be attached to this encrypted information.

The SIP message is sent to the communication device 202-2 via the session control server 201-1 and the session control server 201-2. The information which has been encrypted is set as S/MIME Enveloped-Data. The key which has been used for this encryption (the first encryption key) is subjected to encryption by both the public key of the session control server 201 and the public key of the destination user (the second encryption key), and is set as recipientlnfos 806 in the Enveloped-Data.

Furthermore, the first encryption key may also be subjected to encryption with a pre-shared key between the session control server 201-1 and the communication device 202-1, and with a pre-shared key between the users of the communication device 202-1 and the communication device 202-2.

And a value which shows the decryption request to the session control server, and the contents ID which is to be decrypted, are included in the range 801 within the SIP message which is not encrypted.

In order to detect the presence or absence of tampering in the information 802 which is the combination of the portion 801 of the SIP message and the EnvelopedData 804, a digital signature of the user of the communication device 202-1 may also be attached.

The session control server 201-1 receives the INVITE method 800 which has been sent from the communication device 202-1 with the signal receiving unit 210. By the decryption decision unit 211, a decryption request may be decided upon according to the value of the decryption request parameter (for example: Session-Policy), or a decryption request may be decided upon according to the presence or absence of decryption of recipientlnfos 806 for which the first encryption key, which has been encrypted, has been set.

If there is a decryption request, the encryption key decryption unit 212 refers to the type of the data (recipientInfos) 806, among the data 804 indicated by the designated contents ID, in which the first encryption key has been stored, and, having first made a decision as to which second encryption key it corresponds and as to whether to perform decryption using the second decryption key, decrypts the first encryption key, and transfers the decryption key to a signal decryption unit 214. By decrypting the encryption information 805, it becomes possible to refer to the signals for controlling between the communication devices, and the information which is required for the session control unit 215 is made available.

If there is no decryption request, or if the contents ID which has been designated is not set, then the decryption procedure is not performed.

Irrespective of the presence or absence of a decryption request, the session control server 201-1 performs processing (change of the required parameters and so on) upon the INVITE method which has been received from the communication device 201-1 with the session control unit 215, and sends this INVITE method to the session control server 201-1 by the signal sending unit 216.

The session control server 201-2 receives the INVITE method which has been sent from the session control server 201-1 with the signal receiving unit 210.

The decryption request may be decided upon by the decryption decision unit 211 according to the value of a decryption request parameter (for example: Session-Policy), or the decryption request may be decided upon according to the possibility or impossibility of decryption of recipientlnfos 806 in which the first encryption key, which has been encrypted, is set.

If there is no decryption request, or if the decryption is not possible, then it is not possible to refer to the control information between the communication devices which has been encrypted. Based upon the information which can be referred to by the session control unit 215, processing for an INVITE method (reference to the necessary parameters and so on) is performed, and an INVITE method is sent by the signal sending unit 216 to the communication device 202-1.

If the information in the signal which has been received by the signal receiving unit 228 is encrypted with the first encryption key, and the first encryption key has been encrypted and is attached, then the communication device 202-2 which has received this signal uses the second decryption key which corresponds to its own second encryption key (the secret key if the first encryption key is a public key, or, if the second encryption key is a pre-shared key, the same pre-shared key), and decrypts it with the encryption key decryption unit 227, thus obtaining the first encryption key. It uses this first encryption key to decrypt the information which has been encrypted with the signal decryption unit 226, and thereby it becomes possible to refer to this information. This information is provided to the session control unit 221.

Along with generating information which is to be sent according to requirements, the session control unit 221 stores this encryption key in the encryption key reuse unit 225 in correspondence with the session identifier.

For example, the session control unit 221 sends 200 OK 900 as a response signal to the INVITE method shown in FIG. 14. For the information which is to be sent, the first encryption key which is stored is used, and the information 905 which has been encrypted by the signal encryption unit 224 is set as the Encrypted-Data 904, and the signal is sent by the signal sending unit 220.

Furthermore, in order to detect tampering, it would also be acceptable to attach a digital signature to the information 905 which has been encrypted.

### - APPLICATION EXAMPLE 1: REFER TO CLAIM 21 -

A continuation signal of a subsequent session, for example a MESSAGE method, is sent from the communication device 202-1 to the communication device 202-2 via the session control servers 201-1 and 201-2. The communication device 201-1 encrypts the contents of an instant message which is set in the MESSAGE method by using the first encryption key which is recorded for each session. The communication device 201-1 sends this MESSAGE method which includes the encrypted information, without appending the first encryption key.

The communication device 202-2 which has received said signal obtains a first encryption key which is stored with the encryption key reuse unit 223, using the session identifier as a key, and decrypts the encryption information with this first encryption key.

### - APPLICATION EXAMPLE 2: REFER TO CLAIM 18 -

By the session control server 201-1 as well, the encrypted information is decrypted using the first encryption key which is stored for each session.

### - APPLICATION EXAMPLE 3: REFER TO CLAIM 21 -

When, after a fixed time period has elapsed, the communication device 202-1 sends a MESSAGE method to the communication device 202-2 via the session control servers 201-1 and 201-2, the first encryption key is updated by the encryption key updating unit 229. The communication device 202-1 encrypts the information by using the encryption key which has been updated, and sets it as S/MIME Enveloped-Data.

The communication device 202-1 performs two-stage both upon this key which has been used for the encryption (the first encryption key which has been updated) with the public key of the session control server and the public key of the destination user (the second encryption key group), and sets it as recipientInfos in the Enveloped-Data.

The communication device 202-2 which has received the signal which includes the encrypted information to which the first encryption key which has been updated is attached stores the first encryption key which has been updated in the encryption key reuse unit 225.

### - APPLICATION EXAMPLE 4: REFER TO CLAIM 23 -

The session control server 201-1 which has received the signal which includes the encrypted information to which to which the first encryption key which has been updated is attached stores the first encryption key which has been updated in the encryption key reuse unit 213.

### - FIFTH EMBODIMENT -

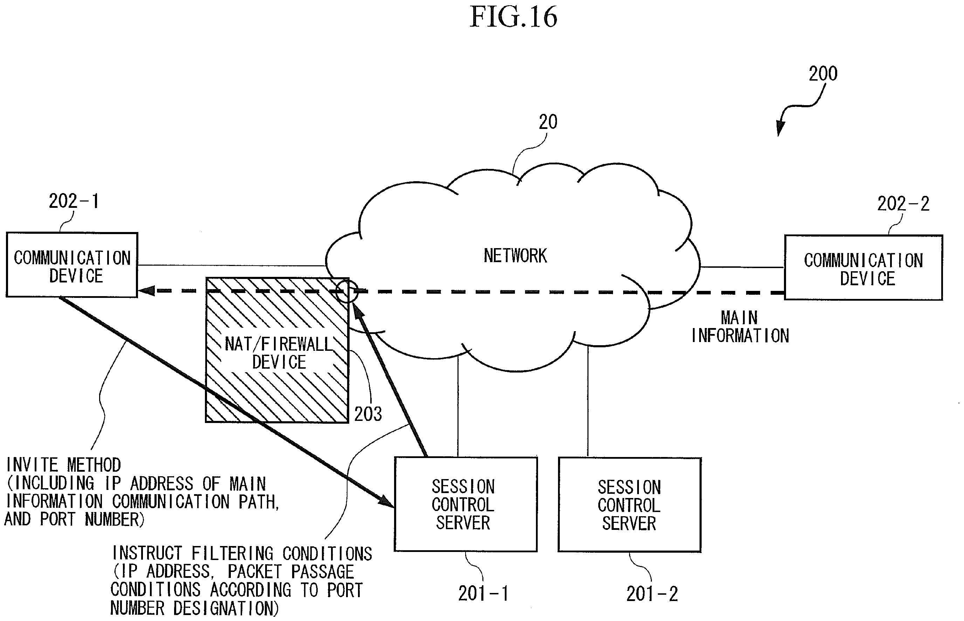

FIG. 16 is a figure for explanation of a communication method according to the fifth embodiment of this invention.

In this example, an example is shown in which the session control server alters the filtering conditions of the NAT/firewall device 203, based upon information which has been obtained during establishment of the session.

For example, we consider the case in which a signal which the session control server has received from the communication device 202-1 is an INVITE method, which is one type of SIP message conforming to RFC3261, and control information between the communication devices (SDP: Session Description Protocol) which is contained in this message is encrypted.

By decrypting using a second decryption key, which corresponds to a second encryption key, the IP address and the port number and so on of the main information communication path of the communication device 202-1 which is set in the control information can be referred to. Based upon this information, an alteration of the filtering conditions for the remote NAT/firewall device 203 (a packet passage command for specified IP addresses and destination port numbers from non-specified IP addresses) is requested by the NAT/firewall control unit 217.

After this, the signal which has been received from the communication device 202-2 is a 200 OK response, which is one type of SIP message, and control information (SDP) between the communication devices is encrypted and is included in this message. This encrypted information is decrypted using the first encryption key which is stored in the decryption key reuse unit 213, and thus it becomes possible to refer to the control information between the communication devices, such as the IP address of the main information communication path of the communication device 202-2 and its port number and the like. Based upon this information, a change of the filtering conditions for the remote NAT/firewall device 203 (a packet passage command for specified IP addresses and port numbers from specified IP addresses) is requested by the NAT/firewall control unit 217. By doing this, packet passage by the NAT/firewall device 203 for the main information becomes possible between the communication device 202-1 and the communication device 202-2.

After this, when the session control server 201-1 receives a BYE method which has been sent by the communication device 202-1 or 202-2, which is a SIP message cutoff signal, a change of the filtering conditions (a packet non-passage command for specified IP addresses and destination port numbers from specified IP addresses) is requested by the NAT/firewall control unit 217 to the NAT/firewall device 203.

Since, as shown by this embodiment, it is possible to perform NAT/firewall control by the session control server 201-1 in which the information within the signals from the communication devices are all securely available by sessions, accordingly it becomes possible to enhance the accuracy of access control. Since the session control server 201-2 in which the information is not available cannot refer to the path information of the main information, monitoring of the main information becomes difficult, and as a result, it is possible to enhance the secrecy of the communication of the main information.

### - SIXTH EMBODIMENT -

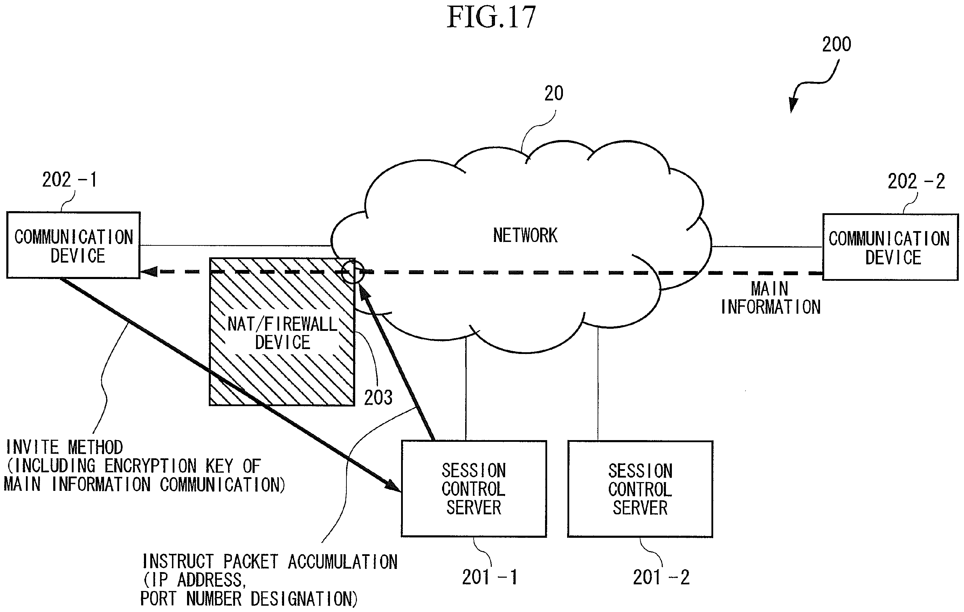

FIG. 17 is a figure for explanation of a communication method according to the sixth embodiment of this invention.

In this example, an example is explained in which it also becomes possible for to record communication for the main information which is encrypted by the session control server 201-1, based upon information which has been obtained during establishment of the session.

For example, the signal which is sent from the communication device 202-1 is an INVITE method, which is one type of SIP message which conforms to RFC3261, and communication device information SDP is encrypted and included in this message. In this SDP, in addition to the IP address and port number which are used in the main information communication between the communication device 202-1 and the communication device 202-2, key information for the main information is included.

The session control server 201-1 comprises a main information communication recording unit (receiving unit 218), and a main information decryption unit 219, and sends a command to the remote NAT/firewall device 203.

In addition to the filtering conditions alteration request which has been explained in the previously discussed fifth embodiment, this command commands main information transfer. The main information is received from the NAT/firewall device 203 by the main information communication receiving unit 218 of the session control server 201-1. If the main information is encrypted, decryption is performed by the main information decryption unit 219 by using the key information for main information encryption, which has already been obtained.

If the decryption terminates normally, the main information which has been decrypted, or the main information in the encrypted state and its key information, are recorded.

Since it cannot decrypt the encryption information, the session control server 201-2 cannot refer to the communication device information SDP, and cannot refer to the key information for the encrypted main information which is included in the SDP. Due to this, even if the main information is monitored by a monitor device within the network, the main information is encrypted and cannot be decrypted.

Since, in this manner, even if the main information is encrypted, the recording of the main information which has been decrypted is performed by the session control server, accordingly it becomes possible to check and to record the communication information.

It should be understood that, if the processing flow which has been explained for the fourth through the sixth embodiments is programmed, and is stored upon a recording medium such as a CD-ROM or the like, then it is convenient when selling or renting the program. Furthermore, it is possible to implement this invention in an easy manner by loading this recording medium into a computer which constitutes the session control servers 201-1 and 201-2, and by installing the program and executing the program.

Since, in this manner, with the communication system according to this embodiment, the information availability is possible, not only between the communication devices, but also to the session control servers which perform the signal relaying, accordingly it becomes possible to perform communication control by specified session control servers, while enhancing the secrecy of the transmitted signals which the communication devices send and receive.

As has been explained above, according to the second embodiment of this invention, it is possible to make the signal information available only to the specified session control servers according to requests from the communication devices, while guaranteeing signal send and reception at high secrecy between the communication devices. Furthermore, it becomes possible to designate the session control servers to which the signal information is available, without any dependence upon the connection structure between the communication devices.

### - THIRD EMBODIMENT -

### - SYSTEM CONFIGURATION -

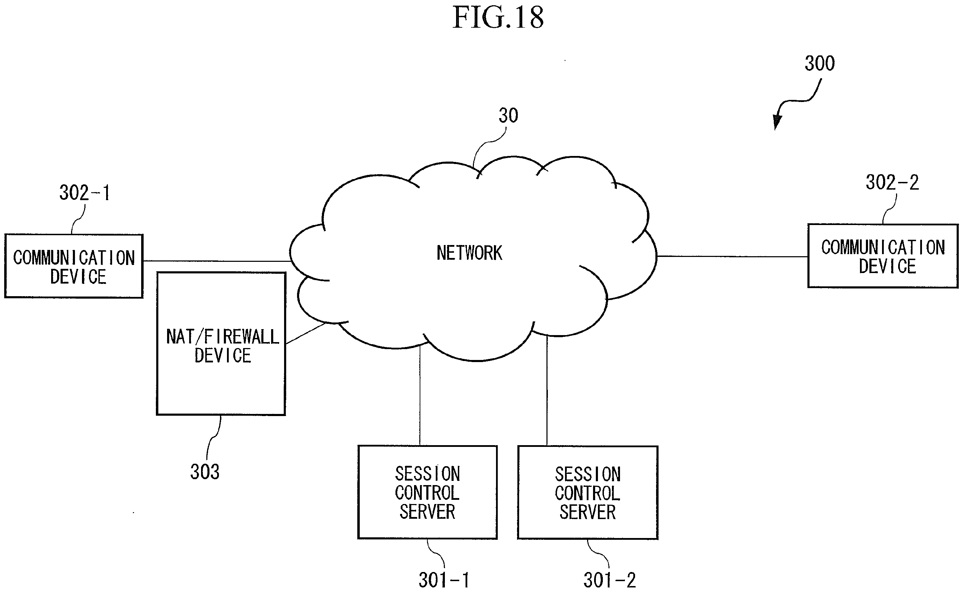

FIG. 18 is a configuration diagram of a communication system according to the third embodiment of this invention.

As shown in FIG. 18, the communication system 300 is configured so as to comprise a plurality of session control servers 301 which are connected together via a network 30 so as to be able to communicate with one another, a plurality of communication devices, a NAT/firewall device 303, and the network 30.

Furthermore, the communication devices 302 perform communication via the session control servers 301 with encrypted signals, according to the procedure of this invention. It should be understood that, in this communication system 300, although two of the session control servers 301 are shown, they are not limited to being two in number. Furthermore although, here, two of the communication devices 302 are shown, they are not limited to being two in number either. And, although here one NAT/firewall device 303 is shown, it is not limited to being one in number either.

It should be understood that, according to this invention, the communication devices 302 include communication devices such as personal computers, portable terminals, or gateways or the like, and the structure of the network 30 may be cabled or wireless.

In the following, in order to serve the convenience of explanation, the explanation will be made in terms of the communication device 302-1 as being the signal originating side, and the communication device 302-2 as being the signal reception side.

The communication device 302-1 sends to the session control server 301-1, along with an encrypted signal, a first encryption key which has been encrypted with a second encryption key using the session control server 301. The session control server 301-1 receives the encrypted signal and the encrypted first encryption key which have thus been sent from the communication device 302-1, decrypts the first encryption key with the decryption key which corresponds to the second encryption key using the session control server 301-1, and, by decrypting the encrypted signal with this first encryption key, makes it possible to refer to the signal and/or to alter it.

The session control server 301-1 encrypts the information using the first encrypted signal which has been received (or a first encrypted signal which has been newly created), encrypts the first encryption key which has been used in the encryption with a second encryption key for the communication device 302-2, and sends it to the session control server 301-2.

The session control server 301-2 receives the encrypted signal and the first encryption key which have been sent from the session control server 301-1. However, since it cannot decrypt these, it cannot refer to the information which is encrypted. The session control server 301-2 sends the encrypted signal which it has received and the first encryption key which is encrypted to the communication device 302-2.

The communication device 302-2 decrypts the first encryption key with the decryption key which corresponds to the second encryption key for the communication device 302-2 which it has received from the session control server 301-2, and, by decrypting the encrypted signal with this first encryption key, makes it possible to refer to the information.

The communication device 302-2 encrypts a signal such as a response signal or the like which must be sent to the communication device 302-1 by reusing the encryption key which has been decrypted, and sends it to the communication device 302-1 via the session control server 301-2 and the session control server 301-1.

### - COMMUNICATION DEVICE -

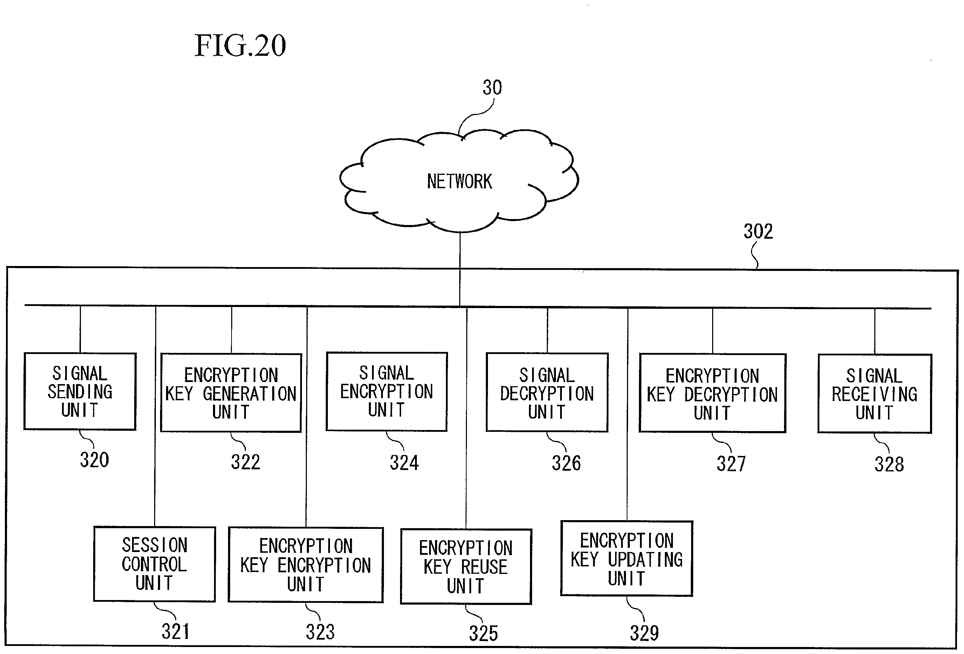

FIG. 20 is a block configuration diagram of a communication device according to the third embodiment of this invention.

As shown in FIG. 20, this communication device 302 is arranged to comprise a signal sending unit 320, a session control unit 321, an encryption key generation unit 322, an encryption key encryption unit 323, a signal encryption unit 324, an encryption key reuse unit 325, a signal decryption unit 326, an encryption key decryption unit 327, a signal receiving unit 328, and an encryption key updating unit 329.

The communication device 302-1 encrypts those signals, among the signals which are generated by the session control unit 321, for which secrecy is required with the signal encryption unit 324, using an encryption key which has been generated by the encryption key generation unit 322.

And it performs encryption of this first encryption key with the encryption key encryption unit 323, using the public key of the specified session control server which is subjected to the disclosure. At this time, the encryption key which is used is stored in the encryption key reuse unit 325, in correspondence to the session and the opposing device.

It adds the information for which decryption is requested to the session control server to the signal, among the signals which are generated by the session control unit 321, which is not encrypted, and sends it to the session control server 301-1 with the signal sending unit 320, along with the signal which is encrypted and the encryption key which is encrypted. By doing this, signal send for the information for which secrecy is required becomes possible in a state in which it can be available only to the specified session control server 301-1.

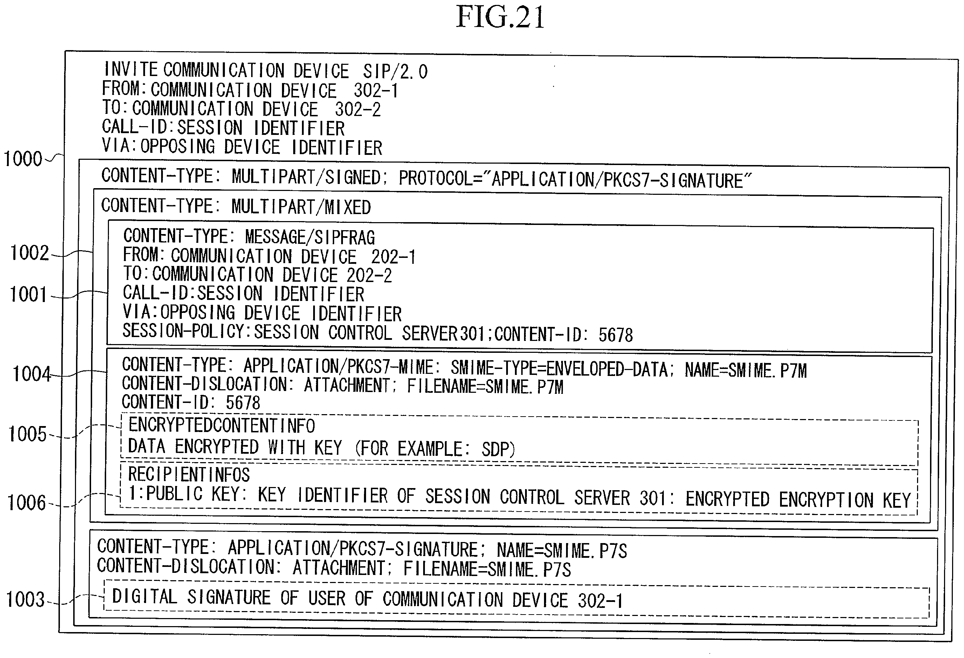

FIG. 21 is a figure showing an example of signal sent by the communication device 302-1 according to the third embodiment of this invention.

The signal which is sent from the communication device 302-1 is an INVITE method, which is one type of SIP message which conforms to RFC3261, and, in this message, there is included control information between the communication devices (SDP: Session Description Protocol) in encrypted form. In this SDP there are included, as information for the main information communication of the communication device 302-1, the IP address for reception, the port number, and so on. In order to detect the presence or absence of tampering, a digital signature of the user of the communication device 302-1 may also be included in this encrypted information 1005. The encrypted information is set as S/MIME Enveloped-Data 1004. The key (a first encryption key) which is used in this encryption is encrypted with the public key of the session control server (a second encryption key), and is set as recipientlnfos 1006 in the Enveloped-Data. In the range 1001 in the SIP message which is not encrypted, there are included a value which indicates a decryption request to the session control server, and the Content-ID which must be decrypted.

A digital signature 1003 may also be attached, in order to detect the presence or absence of tampering in the information 1002, which consists of a combination of a portion 1001 of the SIP message and the EnvelopedData 1004.

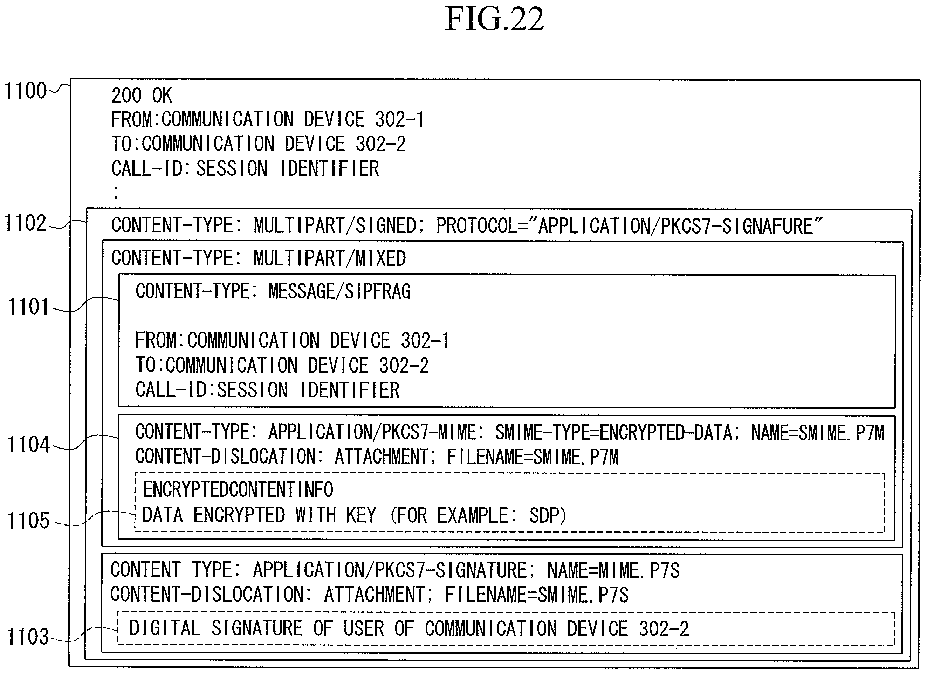

FIG. 22 is a figure showing an example of signal sent by the communication device 302-2 according to the third embodiment of this invention.

The communication device 302-2 sends OK 1100 as a response signal to the INVITE method. The communication device 302-2 sends the information 1105 which has been encrypted. In order to detect the presence or absence of tampering, a digital signature may also be included in the information 1105 which is encrypted. Furthermore, a digital signature 1103 may also be attached to the information 1102 which consists of a combination of the portion 1101 of the SIP message and the EnvelopedData 1104.

### - SESSION CONTROL SERVER -

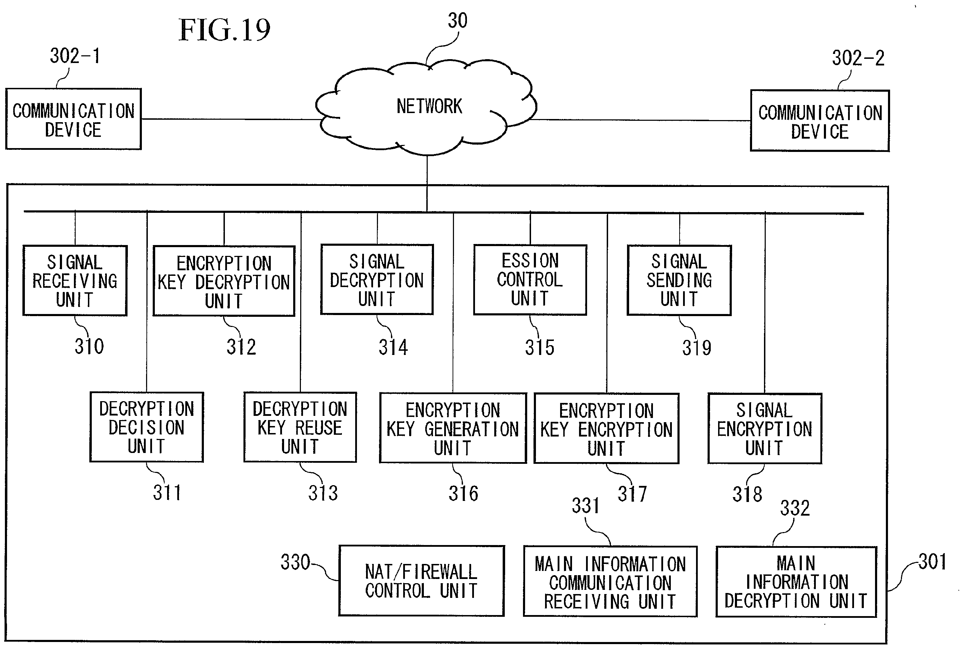

FIG. 19 is a block configuration diagram of a session control server according to the third embodiment of this invention.

As shown in FIG. 19, the session control server 301 comprises a signal receiving unit 310, a decryption decision unit 311, an encryption key decryption unit 312, a decryption key reuse unit 313, a signal decryption unit 314, a session control unit 315, an encryption key generation unit 316, an encryption key encryption unit 317, a signal encryption unit 318, and a signal sending unit 319. In addition to these, it may also comprise a NAT/firewall control unit 330, a main information receiving unit 331, and a main information decryption unit 332.

The encryption key decryption unit 312 provides a unit which obtains a first encryption key as a decryption key for the signal decryption unit 314. By this signal decryption, it becomes possible to refer to the information for control between the communication devices, and the necessary information is provided to the session control unit 315.

A correspondence is established between the first encryption key and the session identifier and the opposing device identifier within the session control unit 315, and the decryption key is stored in the decryption key reuse unit 313. The information which has been decrypted is referred to and/or altered by the session control unit 315, according to requirements. The session control server 301 employs of the first encryption key just as it is, or newly generates a first encryption key with the encryption key generation unit 316, and encrypts the second encryption key (the public key, or a pre-shared key) of the next stage session control server which can be trusted, or of the communication device 302-2, with the encryption key encryption unit 317. And it encrypts the information by employing the first encryption key just as it is, or by using the first encryption key which has been newly generated by the encryption key generation unit 316.

The encryption key and the encrypted information which have been generated in this manner are sent by the signal sending unit 319 to the next stage session control server which can be trusted, or to the communication device 302-2.

### - SEVENTH EMBODIMENT -

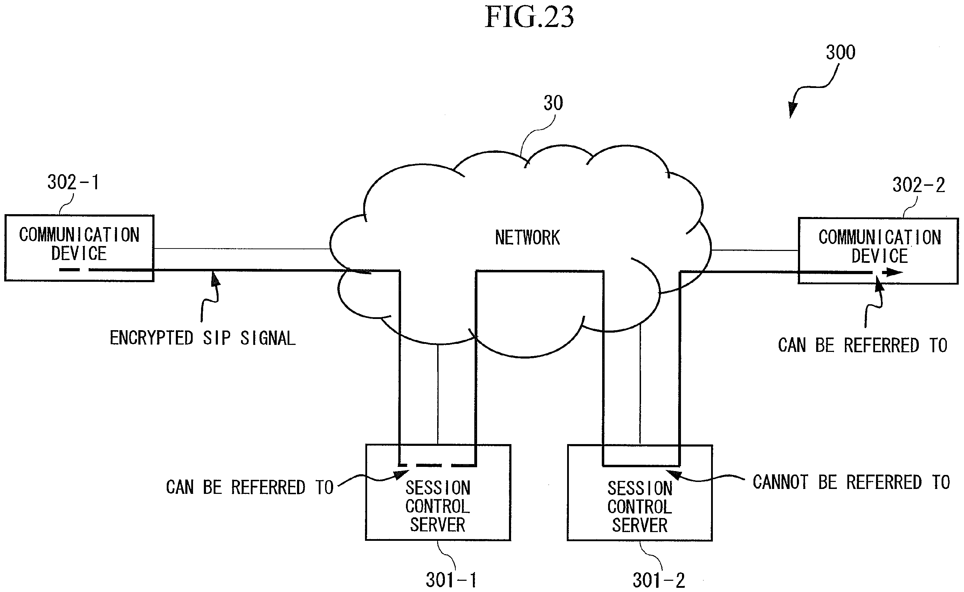

FIG. 23 is a figure for explanation of a communication method according to the seventh embodiment of this invention.

Here, an example is shown in which a session control signal which has been generated by a communication device 302-1 is sent from the communication device 302-1 to a session control server 301-1 which is trusted, and furthermore is sent from that session control server 301-1 to a communication device 302-2 via a session control server 301-1.

For example, the signal which is sent from the communication device 302-1 is an INVITE method, which is one type of SIP message conforming to RFC3261, and it is supposed that control information (SDP) between the communication devices which is included in this message is encrypted (refer to 1005 of FIG. 21). In SDP, the IP address for reception, and the port number and so on, are included as information for main information communication of the communication device 302-1.

The SIP message is sent to the communication device 302-2 via the session control server 301-1 and the session control server 301-2.

The key which is used for encrypting the information (a first encryption key) is encrypted with the public key of the session control server (a second encryption key), and is set as recipientlnfos (refer to 1006 of FIG. 21) in the EnvelopedData.

Furthermore, the first encryption key may be encrypted with a pre-shared key (a password or the like) between the session control server 301-1 and the communication device 302-1.

The session control server 301-1 receives the INVITE method which has been sent from the communication device 302-1 with a signal receiving unit 310. A decision upon a decision request may be made by a decryption decision unit 311 according to the value of a decryption request parameter (for example: Session-Policy), or the decryption request may be made according as to whether it is possible or impossible to decrypt recipientlnfos in which the first encryption key which has been encrypted is set (refer to 1005 of FIG. 21).

If there is a decryption request, the encryption key decryption unit 312 refers to the type of the data in which the first encryption key is stored (recipientInfos), and, having first made a decision as to which second encryption key it corresponds and as to whether to perform decryption using the second decryption key, decrypts the first encryption key, and transfers the decryption key to a signal decryption unit 314. By decrypting the encryption information, it becomes possible to refer to and/or change the signals for controlling between the communication devices, and the information which is required for the session control unit 315 is made available. According to requirements, the control information between the communication devices is changed by the session control unit 315. Next, by employing the first encryption key just as it is, or by using a first encryption key which has been newly created by the encryption key generation unit 316, the information is encrypted after having been changed by the session control unit 315.

The first encryption key encrypts the information with the second encryption key for the communication device 302-1 (a public key or a pre-shared key). If the session control server 301-2 can be trusted, it may also be encrypted with the second encryption key for the session control server 301-2. The session control server 301-1 performs procedures with the session control unit 315 (changing required parameters and the like) with regard to the INVITE method which has been received from the communication device 302-1, and sends the INVITE method to the session control server 301-2 with the signal sending unit 319.

The session control server 301-2 receives the INVITE method which has been sent from the session control server 301-1 with the signal receiving unit 310. A decision as to a decryption request is made by the decryption decision unit 311 according to the value of a decryption request parameter (for example: Session-Policy), or this decision as to a decryption request may be made according to the possibility or impossibility of decrypting recipientInfos (refer to 1006 of FIG. 21) in which the first encryption key which has been encrypted has been set.

If there is no decryption request, or if it is impossible to perform the decryption, then the procedures for the INVITE method (change of the necessary parameters and so on) are performed by the session control unit 316, based upon the information which can be referred to, and the INVITE method is sent to the communication device 302-2 by the signal sending unit 319.

The communication device 302-2 which has received this signal, if the signal which it has received with the signal receiving unit 328 is encrypted, and if the first encryption key is encrypted and is attached, decrypts it with the encryption key decryption unit 327, using the second decryption key which corresponds to its own second decryption key (the secret key if the first decryption key is a public key, or, if the first encryption key is a pre-shared key, that pre-shared key), and thus obtains the first decryption key. By decrypting the information which has been encrypted by using this first encryption key with the signal decryption unit 326, it becomes possible for that information to be referred to. This information is made available to the session control unit 321.

The session control unit 321, along with generating information which must be sent according to requirement, also stores the encryption key in the encryption key reuse unit 325, while establishing a correspondence with the session and the opposing device. For example, the session control unit 321 sends 1100 of FIG. 22 as a response signal to the INVITE method. With regard to the information which must be sent, it encrypts the information with the signal encryption unit 324, using the first encryption key which is stored, and sends it with the signal sending unit 320.

### - APPLICATION EXAMPLE 5: REFER TO CLAIM 42 -

A continuation signal for a subsequent session, for example a MESSAGE method, is sent by the communication device 302-1 to the communication device 302 via the session control servers 301-1 and 301-2. The communication device 302-1 encrypts the information which is set in this MESSAGE method by using the first encryption key which is recorded by session. It sends the MESSAGE method which includes the encrypted information without appending the first encryption key.

With the encryption key reuse unit 325, the communication device 302-2 which has received said signal obtains the first encryption key which is stored, using as a key the session and the identifier of the opposing device, and decrypts the encrypted information with this first encryption key.

### - APPLICATION EXAMPLE 6: REFER TO CLAIMS 38 AND 39 -

The encrypted information is decrypted by the session control server 301-1 as well, by using the first encryption key which is stored by session and opposing device.

### - APPLICATION EXAMPLE 7: REFER TO CLAIM 43 -

Furthermore, after a fixed time period has elapsed, when the communication device 302-1 sends a MESSAGE method to the communication device 302-2 via the session control servers 301-1 and 301-2, it updates the first encryption key with the encryption key updating unit 329. It encrypts the information using this encryption key which has been updated, and sets it as the S/MIME Enveloped-Data.

This key which is used for the encryption (the first encryption key which has been updated) is encrypted with the public key of the session control server (the second encryption key), and is set as recipientlnfos in the Enveloped-Data.

When an encrypted signal is received to which a first encryption key which has been updated is attached, the communication device 302-2 stores this first encryption key which has been updated in the encryption key reuse unit 325.

### - APPLICATION EXAMPLE 8: REFER TO CLAIM 45 -

The session control server 301-1 which has received an encrypted signal to which the first encryption key which has been updated is attached stores this first encryption key which has been updated in the encryption key reuse unit 325.

### - EIGHTH EMBODIMENT -

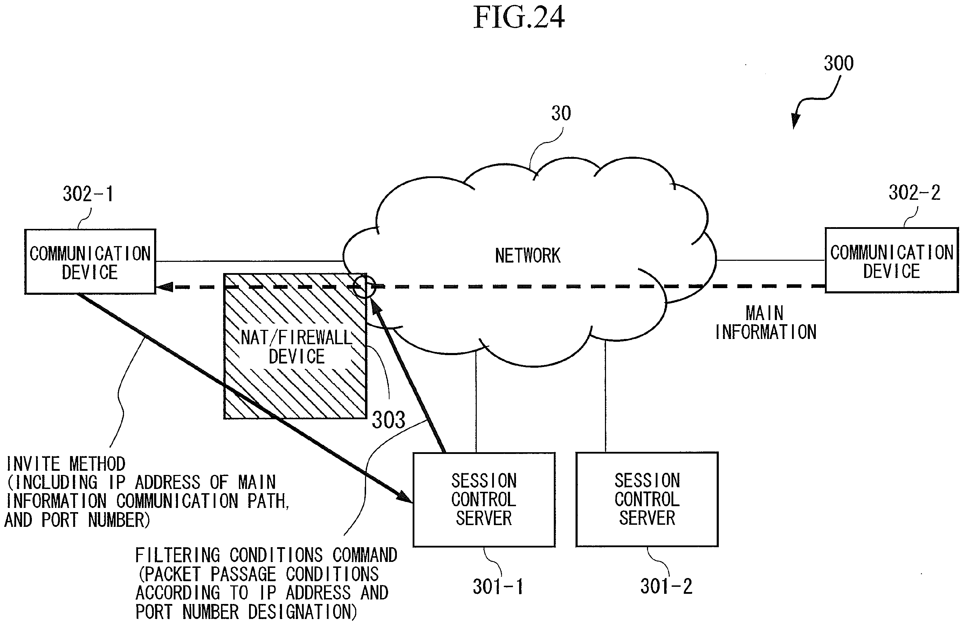

FIG. 24 is a figure for explanation of a communication method according to the eighth embodiment of this invention.

Here, an example is shown in which the session control server 301-1 changes the filtering conditions of the NAT/firewall device 303, based upon information which has been obtained while establishing the session.

For example, suppose that the signal which the session control server 301-1 has received from the communication device 302-1 is an INVITE method, which is one type of SIP message which conforms to RFC3261, and that the control information (SDP) between the communication devices which is included in this message is encrypted. The type of the data (recipientInfos) (refer to 1006 of FIG. 22) in which the first encryption key is stored is referred to by the session control server 301-1 with the encryption key decryption unit 312, and, decryption of the first encryption key is performed after having made a decision as to which key to use for decryption.

By decrypting the encrypted information (refer to 1005 of FIG. 22) with the first encryption key, it becomes possible to refer to and/or to change the control information between the communication devices (for example, the IP address and the port number of the main information communication path of the communication device 302-1).

Based upon this information, change of the filtering conditions (a packet passage command from non-specified IP addresses to specified IP addresses and port numbers) is requested by the NAT/firewall control unit 330 to the remote NAT/firewall device 303. Furthermore, the session control server 301-1 is able to change the control information between the control devices, such as the IP address and the port number and so on of the main information communication path.

The signal which the session control server 301-1, thereafter, has received from the communication device 302-2 is a 200 OK response, which is one type of SIP message, and the control information (SDP) between the control devices which is included in this message is encrypted. By decrypting the encrypted information using the first encryption key which has been stored in the decryption key reuse unit 313, it becomes possible to refer to the control information between the communication devices such as the IP address and the port number and so on of the main information communication path of the communication device 302-2.

Based upon this information, change of the filtering conditions (a packet passage command from specified IP addresses to specified IP addresses and port numbers) is requested by the NAT/firewall control unit 330 to the remote NAT/firewall device 303. By doing this, it becomes possible for the NAT/firewall device 303 to pass packets for the main information between the communication device 302-1 and the communication device 302-2.

After this, when a BYE method is received, which is a cutoff signal of an SIP message which has been received from the communication device 302-1 or 302-2, the session control server 301-1 requests a change of the filtering conditions (a packet non-passage command from specified IP addresses to specified IP addresses and port numbers) to the NAT/firewall device 303 with the NAT/firewall control unit 330.

As shown with this embodiment, the NAT/firewall control is performed by the session control server 301-1 to which the information in the signal from the communication device has been made securely available by session, and it becomes possible to enhance the accuracy of the access control. Since the session control server 301-2 to which the information has not been made available cannot refer to the path information in the main information, it becomes difficult for it to monitor the main information, and accordingly it is possible to enhance the secrecy of communication of the main information.

### - NINTH EMBODIMENT -

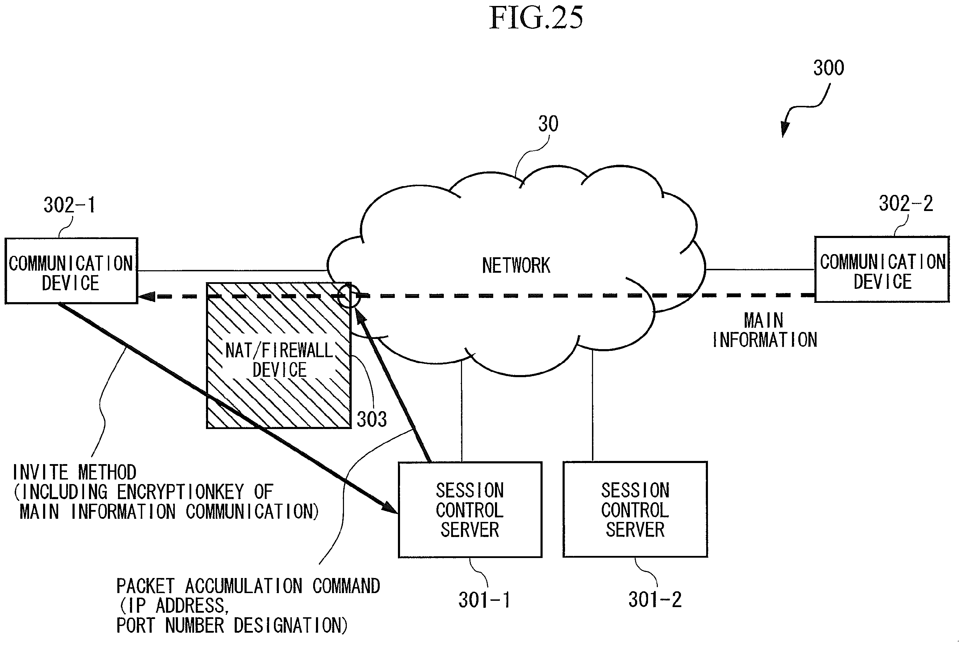

FIG. 25 is a figure for explanation of a communication method according to the ninth embodiment of this invention.

Here, an example is shown in which, based upon information which has been obtained during establishment of the session, the session control server becomes able to record the communication for the main information which is encrypted as well.

For example, the signal which is sent from the communication device 302-1 is an INVITE method, which is one type of SIP message which conforms to RFC3261, and the communication device information SDP which is included in this message is encrypted. In the SDP, there is included key information for the main information encryption, in addition to the IP address and port number which are used during the main information communication between the communication devices 302-1 and 302-2.

The session control server 301-1 comprises a unit 131 for recording the main information communication and a main information decryption unit 132, and sends commands to the remote NAT/firewall device 303.

In addition to the request for change of filtering conditions of the eighth embodiment, main information transfer is commanded. The main information is received from the NAT/firewall device 303 by the main information communication receiving unit 131 of the session control server. If this main information is encrypted, decryption thereof is performed by the main information decryption unit 132 by using the key information for main information encryption, which has already been obtained. When the decryption terminates normally, the resulting information is recorded.

Since the session control server 301-2 cannot decrypt the encrypted signal, it cannot refer to the communication device information SDP, and it cannot refer to the key information for main information encryption which is included in the SDP. Due to this, even if the main information is monitored by a monitoring device within the network, this is encrypted, and cannot be decrypted.

In this manner, even if the main information is encrypted, it becomes possible to perform recording of the main information which has been decrypted by a specified session control server which can be trusted, and to check the communication information

In this manner, with the communication method according to this embodiment, it is made possible for any desired session control server which performs signal relaying to have the information available, or to change it, and accordingly it becomes possible to send the information safely, and to perform communication control with a specified session control server.

It should be understood that, if the procedure which has been explained above for the seventh, eighth, and ninth embodiments is programmed, and this program is stored upon a recording medium such as a CD-ROM or the like, this is very convenient when selling or renting the program. Furthermore, it is possible to implement this invention easily by fitting this recording medium into a computer of the session control server, or into a computer of the communication device, and by installing the program and executing it.

As has been explained in the above, according to this invention, it is possible to make the signal information available only to a specified session control server or end user, irrespective of the connection structure. Furthermore, not only can the information be referred to by the session control server, but it can also be changed.

By doing this, the outstanding benefit is reaped that it becomes possible to guarantee the security to a destination which can be trusted.

## Claims

1. A communication device (102-1) which is connected via a network (10) to a single session control server (101-1) so as to be able to communicate with another communication device (102-2) via the single session control server (23-28), the communication device (102-1) comprising:
an asymmetric key generation unit (114) configured to generate an asymmetric key pair including a public key (18, 32, 69);
a location registration requesting unit (112) configured to send to the single session control server, a location registration request that requests the single session control server to register a location of the communication device, the location registration request including a certificate issuance request that requests the single session control server to issue a certificate of the public key (18, 32, 37);
a certificate notification receiving unit (118) configured to receive from the single session control server, a notification indicating that the location of the communication device has been registered, the notification including location information indicating the location registered, a validity period of the location information, and the certificate of the public key (18, 35, 37, 41); and
a location information and public key certificate storage unit (116) configured to store the location information and the certificate of the public key, along with the validity period (18, 35, 45) wherein the validity period of the location information is also used as a validity period of the certificate of the public key (62).

2. A single session control server (101-1) which is connected via a network (10) to a plurality of communication devices so as to be able to control a session between a first communication device (102-1) and a second communication device (102-2) of the plurality of communication devices (23-28), the single session control server (101-1) comprising:
a location registration request receiving unit (125) configured to receive from the first communication device, a location registration request that requests the single session control server to register a location of the first communication device, the location registration request including a certificate issuance request that requests the single session control server to issue a certificate of a public key used for the first communication device to perform the session with the second communication device (18, 32, 37, 50, 51);
a public key certificate notification sending unit (128) configured to send to the first communication device, a notification indicating that the location of the first communication device has been registered, the notification including location information indicating the location registered, a validity period of the location information, and the certificate of the public key (18, 35, 37, 41, 53); and
a location information and public key certificate storage unit (126) configured to store the location information and the certificate of the public key, along with the validity period (18, 35, 52, 62, 63),
wherein the validity period of the location information is also used as a validity period of the certificate of the public key (62).

3. A communication system (100) comprising:
a plurality of communication devices including the first communication device (102-1) and the second communication device (102-2) according to claim 2; and
the session control server according to claim 2.

## Patentansprüche

1. Kommunikationsvorrichtung (102-1), die über ein Netzwerk (10) mit einem Einzelsitzungssteuerserver (101-1) verbunden ist, um in der Lage zu sein, mit einer anderen Kommunikationsvorrichtung (102-2) über den Einzelsitzungssteuerserver (23-28) zu kommunizieren, wobei die Kommunikationsvorrichtung (102-1) Folgendes umfasst:
eine Asymmetrischer-Schlüssel-Erzeugungseinheit (114), die dazu konfiguriert ist, ein asymmetrisches Schlüsselpaar einschließlich eines öffentlichen Schlüssels (18, 32, 69) zu erzeugen;
eine Ortsregistrierungsanfrageeinheit (112), die dazu konfiguriert ist, an den Einzelsitzungssteuerserver eine Ortsregistrierungsanfrage zu senden, die bei dem Einzelsitzungssteuerserver dazu anfragt, einen Ort der Kommunikationsvorrichtung zu registrieren, wobei die Ortsregistrierungsanfrage eine Zertifikatherausgabeanfrage enthält, die bei dem Einzelsitzungssteuerserver dazu anfragt, ein Zertifikat des öffentlichen Schlüssels (18, 32, 37) herauszugeben;
eine Zertifikatbenachrichtigungsempfangseinheit (118), die dazu konfiguriert ist, von dem Einzelsitzungssteuerserver eine Benachrichtigung zu empfangen, die angibt, dass der Ort der Kommunikationsvorrichtung registriert worden ist, wobei die Benachrichtigung Ortsinformation enthält, die den registrierten Ort angibt, eine Gültigkeitsperiode der Ortsinformation, und das Zertifikat des öffentlichen Schlüssels (18, 35, 37, 41); und
eine Ortsinformations- und Öffentlicher-Schlüssel-Zertifikatspeichereinheit (116), die dazu konfiguriert ist, die Ortsinformation und das Zertifikat des öffentlichen Schlüssels zusammen mit der Gültigkeitsperiode (18, 35, 45) zu speichern, wobei die Gültigkeitsperiode der Ortsinformation auch als eine Gültigkeitsperiode des Zertifikats des öffentlichen Schlüssels (62) verwendet wird.

2. Einzelsitzungssteuerserver (101-1), der über ein Netzwerk (10) mit einer Mehrzahl von Kommunikationsvorrichtungen verbunden ist, um in der Lage zu sein, eine Sitzung zwischen einer ersten Kommunikationsvorrichtung (102-1) und einer zweiten Kommunikationsvorrichtung (102-2) der Mehrzahl von Kommunikationsvorrichtungen (23-28) zu steuern, wobei der Einzelsitzungssteuerserver (101-1) Folgendes umfasst:
eine Ortsregistrierungsanfrageempfangseinheit (125), die dazu konfiguriert ist, von der ersten Kommunikationsvorrichtung eine Ortsregistrierungsanfrage zu empfangen, die bei dem Einzelsitzungssteuerserver dazu anfragt, einen Ort der ersten Kommunikationsvorrichtung zu registrieren, wobei die Ortsregistrierungsanfrage eine Zertifikatherausgabeanfrage enthält, die bei dem Einzelsitzungssteuerserver dazu anfragt, ein Zertifikat eines öffentlichen Schlüssels herauszugeben, der für die erste Kommunikationsvorrichtung verwendet wird, um die Sitzung mit der zweiten Kommunikationsvorrichtung (18, 32, 37, 50, 51) durchzuführen;
eine Öffentlicher-Schlüssel-Zertifikat-Benachrichtigungssendeeinheit (128), die dazu konfiguriert ist, an die erste Kommunikationsvorrichtung eine Benachrichtigung zu senden, die angibt, dass der Ort der ersten Kommunikationsvorrichtung registriert worden ist, wobei die Benachrichtigung Ortsinformation enthält, die den registrierten Ort angibt, eine Gültigkeitsperiode der Ortsinformation, und das Zertifikat des öffentlichen Schlüssels (16, 35, 37, 51, 53); und
eine Ortsinformations- und Öffentlicher-Schlüssel-Zertifikat-Speichereinheit (126), die dazu konfiguriert ist, die Ortsinformation und das Zertifikat des öffentlichen Schlüssels zusammen mit der Gültigkeitsperiode (18, 35, 52, 62, 63) zu speichern,
wobei die Gültigkeitsperiode der Ortsinformation auch als eine Gültigkeitsperiode des Zertifikats des öffentlichen Schlüssels (62) verwendet wird.

3. Kommunikationssystem (100), umfassend Folgendes:
eine Mehrzahl von Kommunikationsvorrichtungen, die die erste Kommunikationsvorrichtung (102-1) und die zweite Kommunikationsvorrichtung (102-2) nach Anspruch 2 enthalten; und
den Sitzungssteuerserver nach Anspruch 2.

## Revendications

1. Dispositif de communication (102-1) qui est connecté, par l'intermédiaire d'un réseau (10), à un serveur de commande de session unique (101-1) afin d'être capable de communiquer avec un autre dispositif de communication (102-2) par l'intermédiaire du serveur de commande de session unique (23-28), le dispositif de communication (102-1) comprenant :
une unité de génération de clefs asymétriques (114), configurée pour générer une paire de clefs asymétriques incluant une clef publique (18, 32, 69) ;
une unité de demande d'enregistrement de localisation (112) configurée pour envoyer, au serveur de commande de session unique, une demande d'enregistrement de localisation qui demande au serveur de commande de session unique d'enregistrer une localisation du dispositif de communication, la demande d'enregistrement de localisation incluant une demande de délivrance de certificat qui demande au serveur de commande de session unique de délivrer un certificat de la clef publique (18, 32, 37) ;
une unité de réception de notification de certificat (118) configurée pour recevoir, à partir du serveur de commande de session unique, une notification indiquant que la localisation du dispositif de communication a été enregistrée, la notification incluant des informations de localisation indiquant la localisation enregistrée, une période de validité des informations de localisation, et le certificat de la clef publique (18, 35, 37, 41) ; et
une unité de stockage d'informations de localisation et de certificat de clef publique (116) configurée pour stocker les informations de localisation et le certificat de la clef publique, conjointement avec la période de validité (18, 35, 45), dans lequel la période de validité des informations de localisation est également utilisée en tant que période de validité du certificat de la clef publique (62).

2. Serveur de commande de session unique (101-1) qui est connecté par l'intermédiaire d'un réseau (10) à une pluralité de dispositif de communications afin d'être capable de commander une session entre un premier dispositif de communication (102-1) et un second dispositif de communication (102-2) de la pluralité de dispositif de communications (23-28), le serveur de commande de session unique (101-1) comprenant :
une unité de réception de demande d'enregistrement de localisation (125) configurée pour recevoir, à partir du premier dispositif de communication, une demande d'enregistrement de localisation qui demande au serveur de commande de session unique d'enregistrer une localisation du premier dispositif de communication, la demande d'enregistrement de localisation incluant une demande de délivrance de certificat qui demande au serveur de commande de session unique de délivrer un certificat d'une clef publique utilisée pour le premier dispositif de communication pour réaliser la session avec le second dispositif de communication (18, 32, 37, 50, 51) ;
une unité d'envoi de notification de certificat de clef publique (128) configurée pour envoyer, au premier dispositif de communication, une notification indiquant que la localisation du premier dispositif de communication a été enregistrée, la notification incluant des informations de localisation indiquant la localisation enregistrée, une période de validité des informations de localisation, et le certificat de la clef publique (18, 35, 37, 41, 53) ; et
une unité de stockage d'informations de localisation et de certificat de clef publique (126) configurée pour stocker les informations de localisation et le certificat de la clef publique, conjointement avec la période de validité (18, 35, 52, 62, 63),
dans lequel la période de validité des informations de localisation est également utilisée en tant que période de validité du certificat de la clef publique (62).

3. Système de communication (100), comprenant :
une pluralité de dispositifs de communication incluant le premier dispositif de communication (102-1) et le second dispositif de communication (102-2) selon la revendication 2 ; et
le serveur de commande de session selon la revendication 2.
